(19) Europäisches Patentamt
European Patent Office
Office européen des brevets

(11) EP 4 510 277 A1

(12) **EUROPEAN PATENT APPLICATION**
published in accordance with Art. 153(4) EPC

(43) Date of publication:
**19.02.2025 Bulletin 2025/08**

(21) Application number: **23788661.9**

(22) Date of filing: **14.04.2023**

(51) International Patent Classification (IPC):
***H01M 10/0565*** *(2010.01)* ***H01M 10/0525*** *(2010.01)*

(52) Cooperative Patent Classification (CPC):
**C08F 290/06; C08G 65/00; H01M 10/0525; H01M 10/0565; H01M 10/42;** Y02E 60/10

(86) International application number:
**PCT/KR2023/005137**

(87) International publication number:
**WO 2023/200313 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.04.2022 KR 20220046564**

(71) Applicant: **LG Energy Solution, Ltd.**
**Seoul 07335 (KR)**

(72) Inventors:
- **AHN, Kyoung-Ho**
  **Daejeon 34122 (KR)**
- **PARK, Sol-Ji**
  **Daejeon 34122 (KR)**
- **SHIN, Won-Kyung**
  **Daejeon 34122 (KR)**
- **LEE, Won-Tae**
  **Daejeon 34122 (KR)**
- **LEE, Jae-Won**
  **Daejeon 34122 (KR)**
- **LEE, Jung-Hoon**
  **Daejeon 34122 (KR)**
- **HAN, Jun-Hyeok**
  **Daejeon 34122 (KR)**
- **LEE, Chul-Haeng**
  **Daejeon 34122 (KR)**

(74) Representative: **Hoffmann Eitle**
**Patent- und Rechtsanwälte PartmbB**
**Arabellastraße 30**
**81925 München (DE)**

(54) **GEL POLYMER ELECTROLTYE AND ELECTROCHEMICAL DEVICE COMPRISING SAME**

(57) Provided is a gel polymer electrolyte including a matrix polymer including an oligomer containing a fluorine-substituted polyether unit and at least one acrylate unit at the end thereof. The gel polymer electrolyte increases a degree of freedom of Li ions through the immobilization and stabilization of anions to realize an effect of reducing the resistance of a battery, thereby realizing high lithium-ion conductivity. In addition, the matrix polymer structure in the gel polymer electrolyte provides enhanced high-temperature durability, and thus allows the manufacture of a lithium secondary battery having improved high-voltage high-temperature stability.

FIG. 1

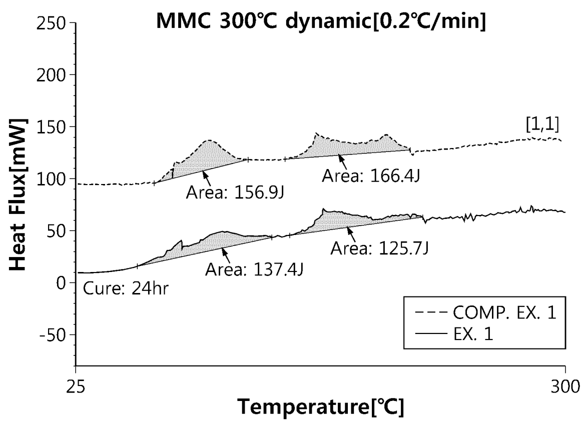


EP 4 510 277 A1

## Description

### TECHNICAL FIELD

The present application claims priority to Korean Patent Application No. 10-2022-0046564 filed on April 14, 2022 in the Republic of Korea. The present disclosure relates to a gel polymer electrolyte and a lithium secondary battery including the same.

### BACKGROUND ART

As the technical development and need for mobile instruments are increased, secondary batteries as energy sources are increasingly in demand. Among such secondary batteries, lithium secondary batteries having high energy density and voltage have been commercialized and used widely.

A lithium secondary battery is obtained through a process including applying each of a positive electrode active material and a negative electrode active material to a current collector, or forming each active material itself into a film shape having an adequate length, and then winding or stacking the resultant structure together with a separator as an insulator to provide an electrode assembly, introducing the electrode assembly to a can or a similar container, and injecting an electrolyte thereto.

Lithium metal oxide has been used as a positive electrode active material, and lithium metal, lithium alloy, crystalline or amorphous carbon or a carbon composite has been used as a negative electrode active material. In addition, as an electrolyte, a liquid-state electrolyte, particularly, an ion conductive liquid electrolyte containing a salt dissolved in a nonaqueous organic solvent has been used widely.

However, as energy storage technology has been given an increasing attention, there has been a need for developing a secondary battery which can be downsized and weight-lightened, allows charge/discharge at high capacity and has high-temperature high-voltage safety. Therefore, recently, development of a battery using a gel polymer electrolyte including a gel polymer rather than a liquid electrolyte has been given an increasing attention.

In general, it is known that the safety of a battery is improved in the order of [liquid electrolyte < gel polymer electrolyte < solid polymer electrolyte], while the performance of a battery is reduced rather.

In other words, as compared to the liquid electrolyte including a liquid-state electrolyte alone, the gel polymer electrolyte is disadvantageous in that it shows low lithium-ion conductivity. To solve this, a method for reducing the thickness of the gel polymer electrolyte has been suggested. However, in this case, there are problems in terms of the battery performance and safety, and for example, the mechanical strength is reduced, and a short-circuit occurs between a positive electrode and a negative electrode with the gel polymer electrolyte in manufacturing a battery.

Therefore, there is a need for development of a gel polymer electrolyte capable of improving the safety and performance of a battery.

### DISCLOSURE

#### Technical Problem

The present disclosure is designed to solve the problems of the related art, and therefore the present disclosure is directed to providing a gel polymer electrolyte which can provide enhanced high-voltage stability and realize an effect of reducing the resistance of a battery.

The present disclosure is also directed to providing a composition for the gel polymer electrolyte.

In addition, the present disclosure is directed to providing a lithium secondary battery including the gel polymer electrolyte.

It will be easily understood that the objects and advantages of the present disclosure may be realized by the means shown in the appended claims and combinations thereof.

#### Technical Solution

According to the first embodiment of the present disclosure, there is provided a gel polymer electrolyte including a matrix polymer, and an electrolyte with which the matrix polymer is impregnated, wherein the matrix polymer is formed into a three-dimensional network structure through the polymerization of an oligomer represented by the following Chemical Formula 1, the electrolyte includes a lithium salt and a nonaqueous solvent, and the nonaqueous solvent includes at least one selected from the group consisting of a cyclic carbonate-based compound, a linear carbonate-based compound, an alkyl ether-based compound, an alkyl acetate-based compound, an alkyl propionate-based compound and a nitrile-based compound:

[Chemical Formula 1]

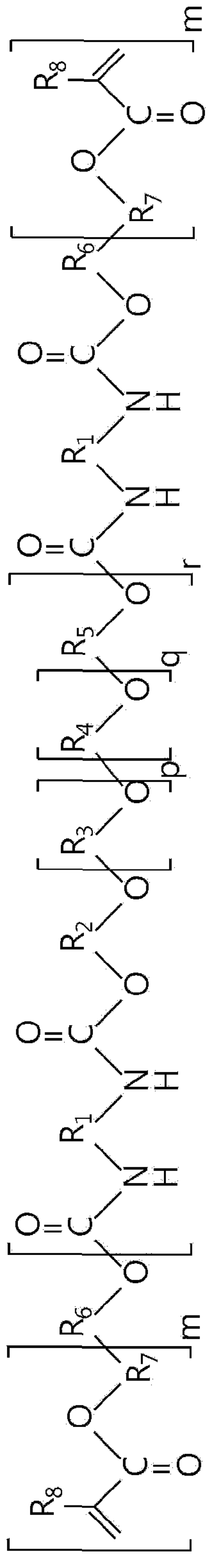

wherein r is an integer of 1 or more,

each $R_1$ represents an aliphatic hydrocarbon group or an aromatic hydrocarbon group,
each of $R_2$ and $R_5$ independently represents a C1-C3 alkyl group in which at least one hydrogen atom is substituted with a fluorine atom,

$R_3$ represents a Cn alkyl group in which all hydrogen atoms are substituted with fluorine atoms, $R_4$ represents a Cn-1 alkyl group in which all hydrogen atoms are substituted with fluorine atoms, and n is 2 or 3,
either of p and q represents 0, or both p and q may represent an integer of 1 or more, and when both p and q represent an integer of 1 or more, p/q has a value of 1/9 to 9/1,
each of $R_6$ and $R_7$ independently represents a C1-C5 linear or branched alkyl group,
$R_8$ is null or represents a methyl group, and
m is an integer selected from 1, 2, 3, 4 and 5.

According to the second embodiment of the present disclosure, there is provided the gel polymer electrolyte as defined in the first embodiment, wherein the oligomer includes unit A represented by the following Chemical Formula 2, unit B represented by the following Chemical Formula 3 and unit C represented by the following Chemical Formula 4:

[Chemical Formula 2]

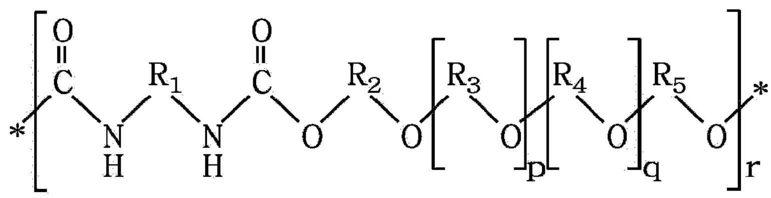

[Chemical Formula 3]

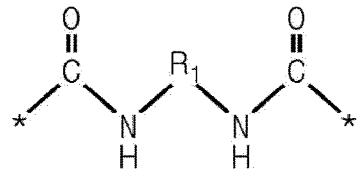

[Chemical Formula 4]

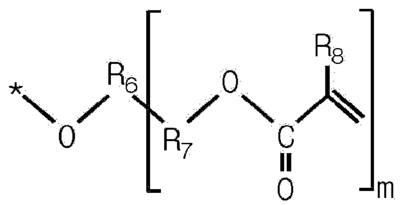

wherein r is an integer of 1 or more,

each $R_1$ represents an aliphatic hydrocarbon group or an aromatic hydrocarbon group,
each of $R_2$ and $R_5$ independently represents a C1-C3 alkyl group in which at least one hydrogen atom is substituted with a fluorine atom,
$R_3$ represents a Cn alkyl group in which all hydrogen atoms are substituted with fluorine atoms, $R_4$ represents a Cn-1 alkyl group in which all hydrogen atoms are substituted with fluorine atoms, and n is 2 or 3,
either of p and q represents 0, or both p and q may represent an integer of 1 or more, and when both p and q represent an integer of 1 or more, p/q has a value of 1/9 to 9/1,
each of $R_6$ and $R_7$ independently represents a C1-C5 linear or branched alkyl group,
$R_8$ is null or represents a methyl group, and
m is an integer selected from 1, 2, 3, 4 and 5.

According to the third embodiment of the present disclosure, there is provided the gel polymer electrolyte as defined in the second embodiment, wherein Chemical Formula 2 is divided into a unit represented by the following Chemical Formula 2-1 and a unit represented by the following Chemical Formula 2-2:

[Chemical Formula 2-1]

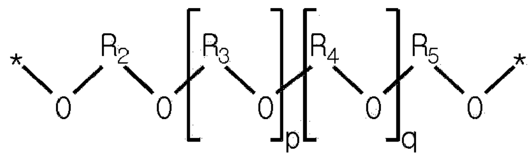

[Chemical Formula 2-2]

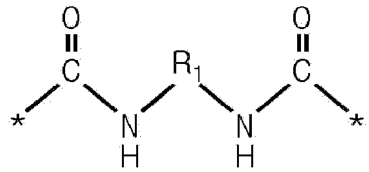

wherein $R_1$ represents an aliphatic hydrocarbon group, an alicyclic hydrocarbon group or an aromatic hydrocarbon group.

According to the fourth embodiment of the present disclosure, there is provided the gel polymer electrolyte as defined in the third embodiment, wherein the aliphatic hydrocarbon group is a C1-C20 alkylene group; a C1-C20 alkylene group containing an isocyanate (NCO) group; a C1-C20 alkoxylene group; a C2-C20 alkenylene group; or a C2-C20 alkynylene group;

the alicyclic hydrocarbon group is a substituted or non-substituted C4-C20 cycloalkylene group; a substituted or non-substituted C4-C20 cycloalkylene group containing an isocyanate (NCO) group; a C4-C20 cycloalkenylene group; or a C2-C20 heterocycloalkylene group; and

the aromatic hydrocarbon group is a substituted or non-substituted C6-C20 arylene group; or a C2-C20 heteroarylene group.

According to the fifth embodiment of the present disclosure, there is provided the gel polymer electrolyte as defined in the fourth embodiment, wherein the structure represented by Chemical Formula 2-2 is derived from any one selected from the compounds represented by the following Chemical Formula a to Chemical Formula n:

[Chemical Formula a]

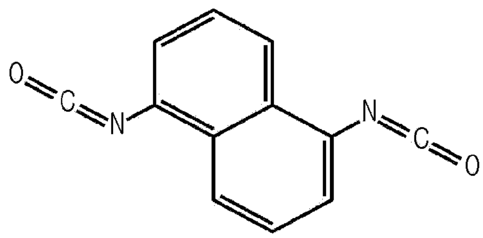

[Chemical Formula b]

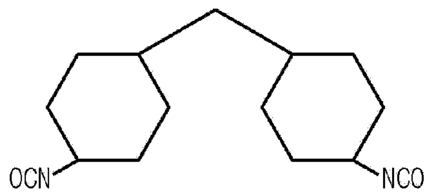

[Chemical Formula c]

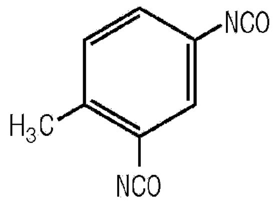

[Chemical Formula d]

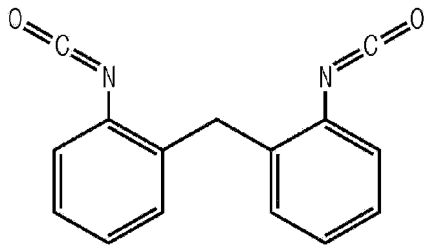

[Chemical Formula e]

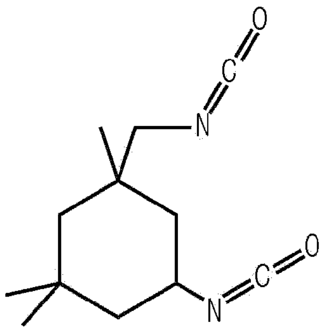

[Chemical Formula f]

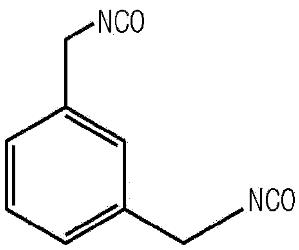

[Chemical Formula g]

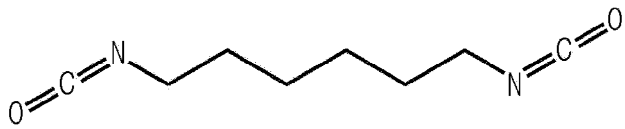

[Chemical Formula h]

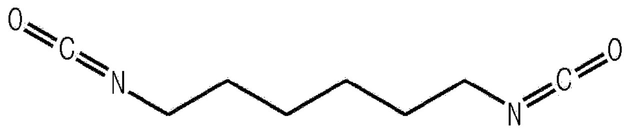

[Chemical Formula i]

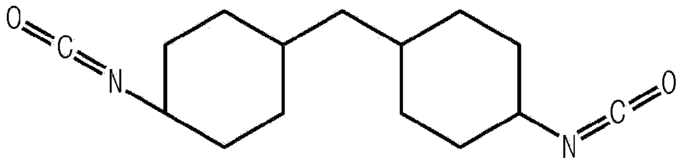

[Chemical Formula j]

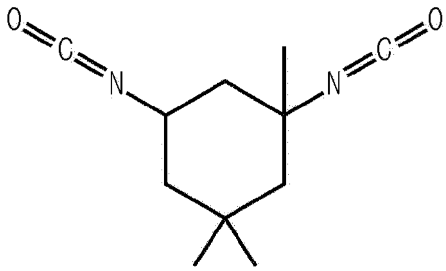

[Chemical Formula k]

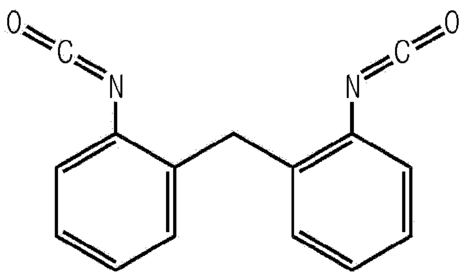

[Chemical Formula l]

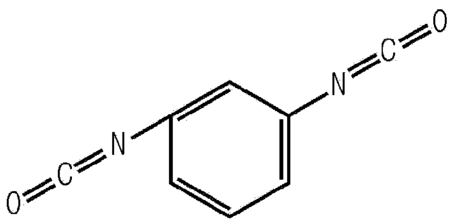

[Chemical Formula m]

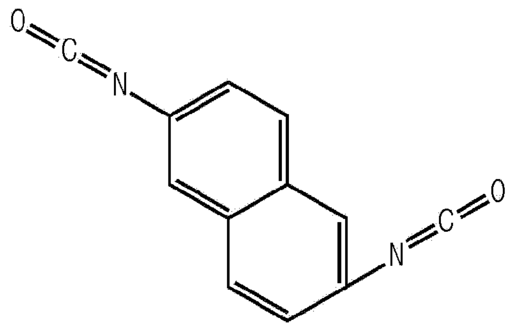

[Chemical Formula n]

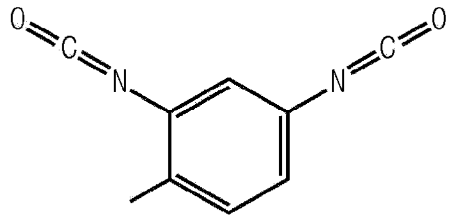

According to the sixth embodiment of the present disclosure, there is provided the gel polymer electrolyte as defined in the fourth embodiment, wherein the structure represented by Chemical Formula 2-2 is any one selected from the following Chemical Formula o to Chemical Formula x:

[Chemical Formula o]

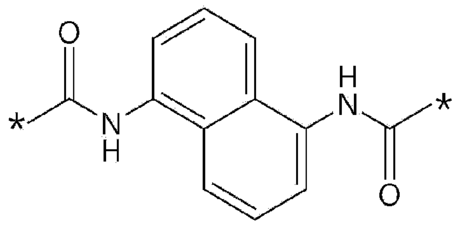

[Chemical Formula p]

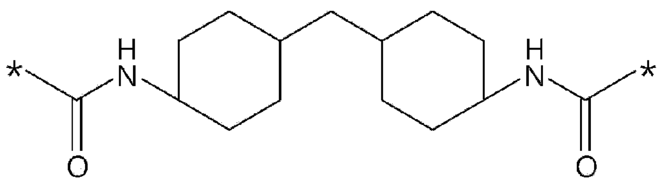

[Chemical Formula q]

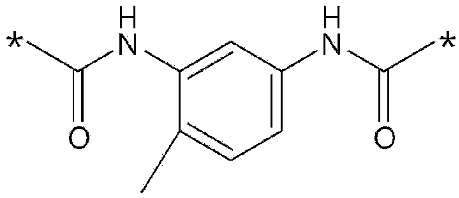

[Chemical Formula r]

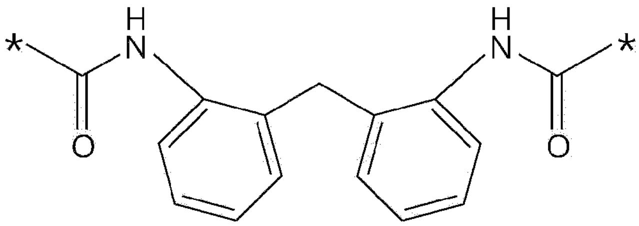

[Chemical Formula s]

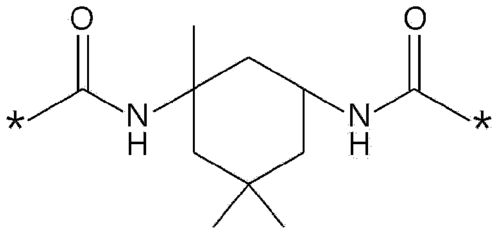

[Chemical Formula t]

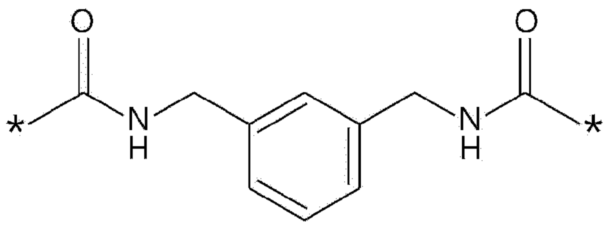

[Chemical Formula u]

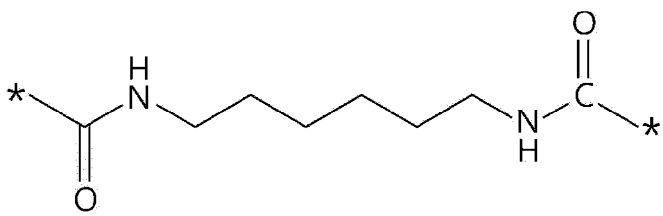

[Chemical Formula v]

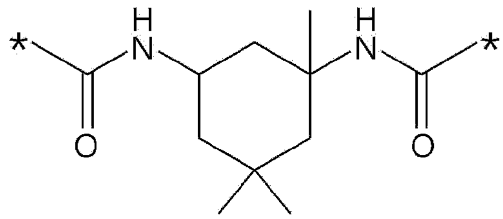

[Chemical Formula w]

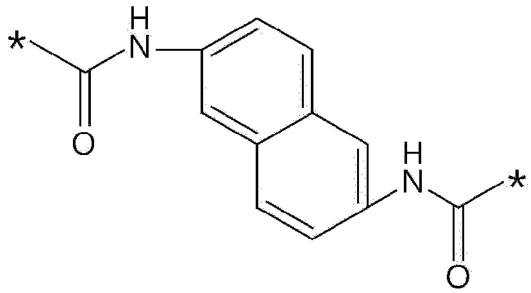

[Chemical Formula x]

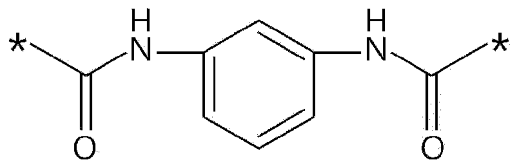

According to the seventh embodiment of the present disclosure, there is provided the gel polymer electrolyte as defined in any one of the second to the sixth embodiments, wherein Chemical Formula 4 provides (meth)acryloyl groups to both ends of the oligomer represented by Chemical Formula 1.

According to the eighth embodiment of the present disclosure, there is provided the gel polymer electrolyte as defined in any one of the first to the seventh embodiments, wherein the oligomer includes a compound represented by the following Chemical Formula 5:

[Chemical Formula 5]

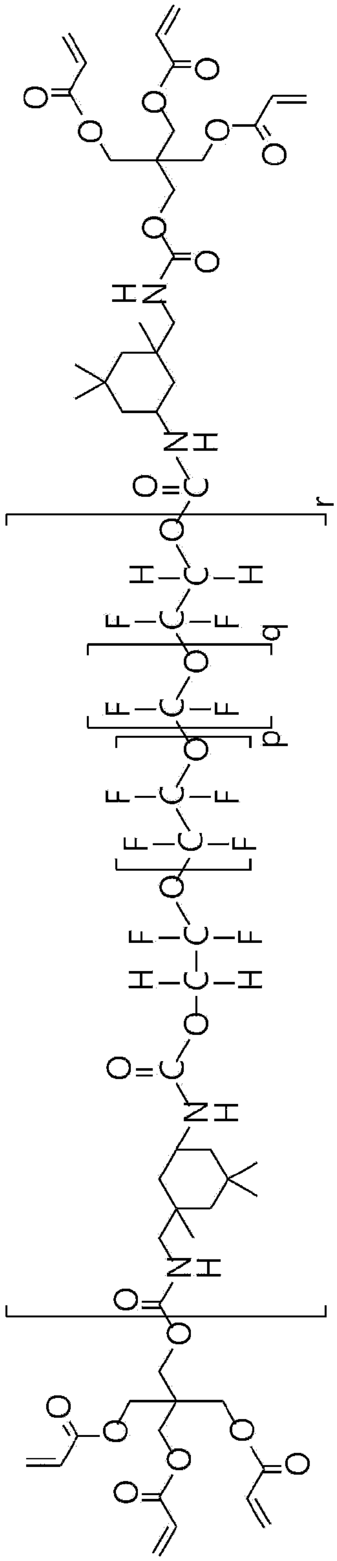

According to the ninth embodiment of the present disclosure, there is provided the gel polymer electrolyte as defined in any one of the first to the eighth embodiments, wherein the oligomer has a weight average molecular weight (Mw) of about 1,000-500,000 g/mol.

According to the tenth embodiment of the present disclosure, there is provided the gel polymer electrolyte as defined in any one of the first to the ninth embodiments, wherein the matrix polymer further includes inorganic particles in an amount of 5-700 parts by weight based on 100 parts by weight of the oligomer.

According to the eleventh embodiment of the present disclosure, there is provided the gel polymer electrolyte as

defined in any one of the first to the tenth embodiments, which has a gel content of about 1 wt% or more at a temperature of 25°C.

According to the twelfth embodiment of the present disclosure, there is provided a lithium-ion secondary battery including a negative electrode, a positive electrode and a gel polymer electrolyte, wherein the gel polymer electrolyte is the same as defined in any one of the first to the eleventh embodiments.

According to the thirteenth embodiment of the present disclosure, there is provided a composition for a gel polymer electrolyte including a lithium salt, a nonaqueous solvent, a polymerization initiator and an oligomer represented by the following Chemical Formula 1, wherein the oligomer is present in an amount of 0.5-20 wt% based on the total weight of the composition for a gel polymer electrolyte:

[Chemical Formula 1]

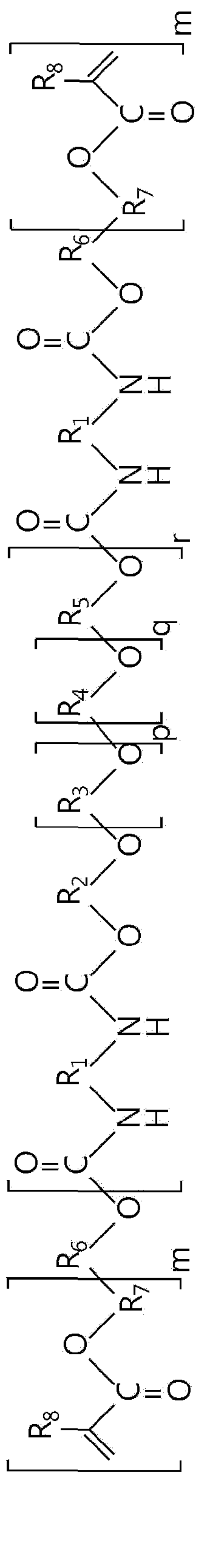

wherein r is an integer of 1 or more,

each $R_1$ represents an aliphatic hydrocarbon group or an aromatic hydrocarbon group,
each of $R_2$ and $R_5$ independently represents a C1-C3 alkyl group in which at least one hydrogen atom is substituted with a fluorine atom,
$R_3$ represents a Cn alkyl group in which all hydrogen atoms are substituted with fluorine atoms, $R_4$ represents a Cn-1 alkyl group in which all hydrogen atoms are substituted with fluorine atoms, and n is 2 or 3,

either of p and q represents 0, or both p and q may represent an integer of 1 or more, and when both p and q represent an integer of 1 or more, p/q has a value of 1/9 to 9/1,

each of $R_6$ and $R_7$ independently represents a C1-C5 linear or branched alkyl group,

$R_8$ is null or represents a methyl group, and

m is an integer selected from 1, 2, 3, 4 and 5.

## Advantageous Effects

The gel polymer electrolyte according to the present disclosure includes a matrix polymer having fluorine-substitute polyether unit and an oligomer containing at least one acrylate unit at the end, and thus increases a degree of freedom of Li ions through the immobilization and stabilization of anions to realize an effect of reducing the resistance of a battery, thereby realizing high lithium-ion conductivity. In addition, the matrix polymer structure in the gel polymer electrolyte provides enhanced high-temperature durability, and thus allows the manufacture of a lithium secondary battery having improved high-voltage high-temperature stability.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1 is a graph illustrating the results of the heat emission safety test of the batteries according to Example 1 and Comparative Example 1 in comparison with each other.

FIG. 2 is a graph illustrating the results of the test for evaluating the capacity retention and increase in resistance of the batteries according to Example 1 and Comparative Example 1 in comparison with each other.

FIG. 3 shows the hot box test result of the battery according to Example 2.

FIG. 4 shows the hot box test result of the battery according to Comparative Example 2.

FIG. 5 shows variations in the capacity and thickness of the batteries according to Example 2 and Comparative Example 2 during repeated charge/discharge.

FIG. 6 is a photographic image of the battery according to Example 2, subjected to the hot box test.

FIG. 7 is a photographic image of the battery according to Comparative Example 2, subjected to the hot box test.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression ‘a part includes or comprises an element’ does not preclude the presence of any additional elements but means that the part may further include the other elements, unless otherwise stated.

As used herein, the terms ’about’, ’substantially’, or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression ‘A and/or B’ means ‘A, B or both of them’.

Meanwhile, the term ’repeating unit’ used herein refers to a unit formed by the polymerization of monomers and derived from the monomers. The repeating unit may be a unit formed directly by the polymerization or a unit formed by treating a polymer so that the unit thereof may be partially converted into another structure.

In addition, unless otherwise stated, ‘*’ used herein refers to a portion where different atoms or ends of chemical formulae are linked to each other.

In general, a gel polymer electrolyte is disadvantageous in that it has lower high-voltage safety and mechanical properties as compared to a solid polymer electrolyte and shows poorer battery resistance and lower ion conductivity as

compared to a liquid electrolyte.

Therefore, recently, some studies have been conducted to improve the lithium-ion conductivity, while ensuring the high-voltage stability, by using a copolymer, such as an oligomer. However, when using an oligomer, it is not easy to control the physical properties, and it is difficult to form a polymer homogeneously in a battery, which makes it difficult to apply the gel polymer electrolyte to a high-capacity and large-scale battery.

Under these circumstances, according to the present disclosure, the above-mentioned problems are solved by providing a gel polymer electrolyte including a matrix polymer formed from an oligomer compound prepared by polymerizing compounds having physical properties capable of supplementing electrochemical characteristics and mechanical properties with each other.

Particularly, in one aspect of the present disclosure, there is provided a gel polymer electrolyte including a matrix polymer, and an electrolyte with which the matrix polymer is impregnated, wherein the matrix polymer is formed into a three-dimensional network structure through the polymerization of an oligomer represented by the following Chemical Formula 1, and the oligomer includes unit A represented by the following Chemical Formula 2, unit B represented by the following Chemical Formula 3 and unit C represented by the following Chemical Formula 4:

[Chemical Formula 1]

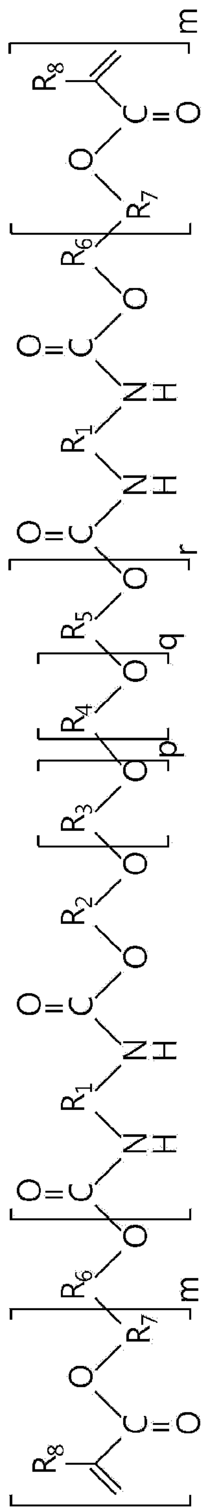

wherein r is an integer of 1 or more,

each $R_1$ represents an aliphatic hydrocarbon group or an aromatic hydrocarbon group,
each of $R_2$ and $R_5$ independently represents a C1-C3 alkyl group in which at least one hydrogen atom is substituted with a fluorine atom,
$R_3$ represents a Cn alkyl group in which all hydrogen atoms are substituted with fluorine atoms, $R_4$ represents a Cn-1

alkyl group in which all hydrogen atoms are substituted with fluorine atoms, and n is 2 or 3,
either of p and q represents 0, or both p and q may represent an integer of 1 or more, and when both p and q represent an integer of 1 or more, p/q has a value of 1/9 to 9/1,
each of $R_6$ and $R_7$ independently represents a C1-C5 linear or branched alkyl group, and more particularly, $R_6$ represents a C2-C4 linear or branched alkyl group,
$R_8$ is null or represents a methyl group, and
m is an integer selected from 1, 2, 3, 4 and 5.

According to the present disclosure, the above description about $R_1$ to $R_7$, r, p and q is also applied to the following Chemical Formula 2, Chemical Formula 3, Chemical Formula 4 and Chemical Formula 5.

Hereinafter, the above Chemical Formula 1 will be explained in detail with reference to unit A (Chemical Formula 2), unit B (Chemical Formula 3) and unit C (Chemical Formula 4) forming Chemical Formula 1, in division:

[Chemical Formula 2]

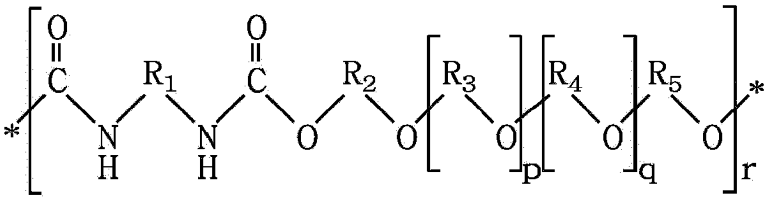

wherein each of p, q and r represents the number of repeating units.

Herein, unit A may be divided into unit A-1 represented by the following Chemical Formula 2-1 and unit A-2 represented by the following Chemical Formula 2-2, and will be explained hereinafter with reference to Chemical Formula 2-1 and Chemical Formula 2-2 in division. In Chemical Formula 2, r is an integer of 1 or more and may have a value of 1-20. Unit A represented by Chemical Formula 2 may have a weight average molecular weight (Mw) of 100-100,000.

[Chemical Formula 2-1]

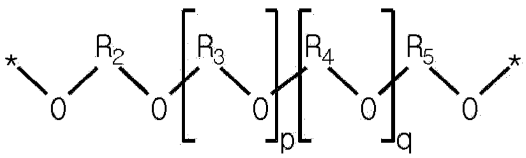

wherein each of $R_2$ and $R_5$ independently represents a C1-C3 alkyl group in which at least one hydrogen atom is substituted with a fluorine atom. In addition, $R_3$ represents a Cn alkyl group in which all hydrogen atoms are substituted with fluorine atoms, $R_4$ represents a Cn-1 alkyl group in which all hydrogen atoms are substituted with fluorine atoms, and n is 2 or 3. In Chemical Formula 2-1, either of p and q represents 0, or both p and q may represent an integer of 1 or more. When both p and q represent an integer of 1 or more, p/q may have a value of 1/9 to 9/1.

[Chemical Formula 2-2]

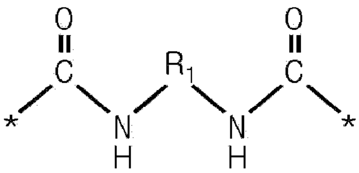

wherein $R_1$ may represent an aliphatic hydrocarbon group, an alicyclic hydrocarbon group or an aromatic hydrocarbon group.

According to an embodiment of the present disclosure, the aliphatic hydrocarbon group may be a C1-C20 alkylene group; a C1-C20 alkylene group containing an isocyanate (NCO) group; a C1-C20 alkoxylene group; a C2-C20 alkenylene group; or a C2-C20 alkynylene group;

the alicyclic hydrocarbon group may be a substituted or non-substituted C4-C20 cycloalkylene group; a substituted or non-substituted C4-C20 cycloalkylene group containing an isocyanate (NCO) group; a C4-C20 cycloalkenylene group; or a C2-C20 heterocycloalkylene group; and

the aromatic hydrocarbon group may be a substituted or non-substituted C6-C20 arylene group; or a C2-C20 heteroarylene group.

According to an embodiment of the present disclosure, the structure represented by Chemical Formula 2-2 may be derived from any one selected from the compounds represented by the following Chemical Formula a to Chemical Formula n:

[Chemical Formula a]

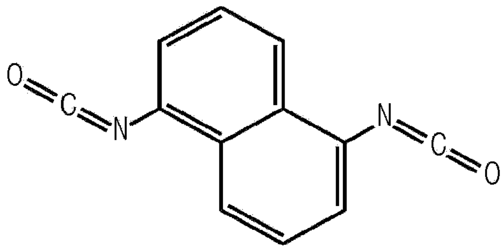

[Chemical Formula b]

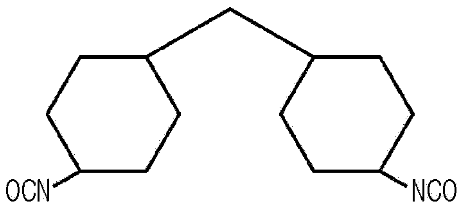

[Chemical Formula c]

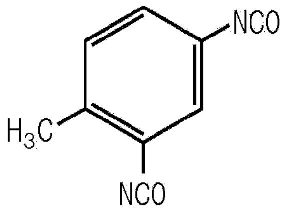

[Chemical Formula d]

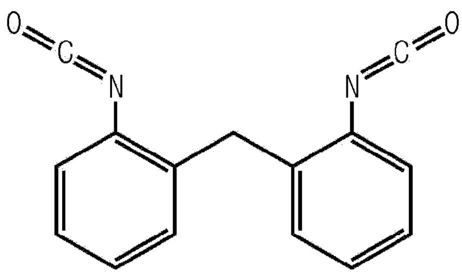

[Chemical Formula e]

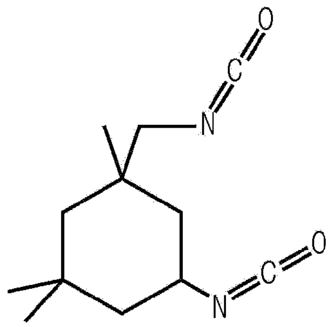

[Chemical Formula f]

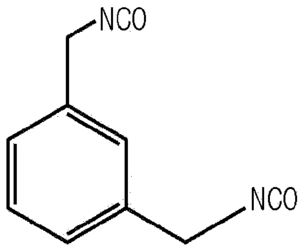

[Chemical Formula g]

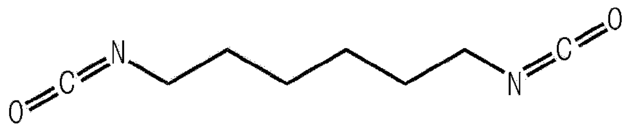

[Chemical Formula h]

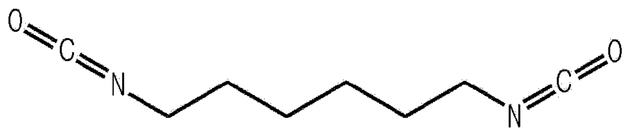

[Chemical Formula i]

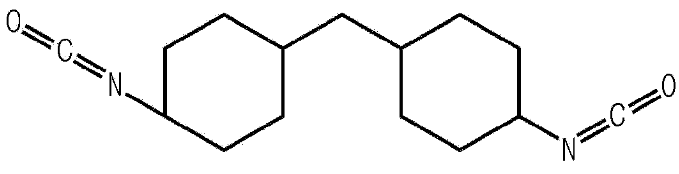

[Chemical Formula j]

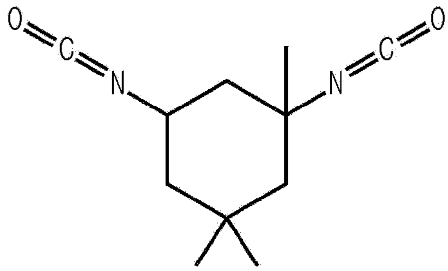

[Chemical Formula k]

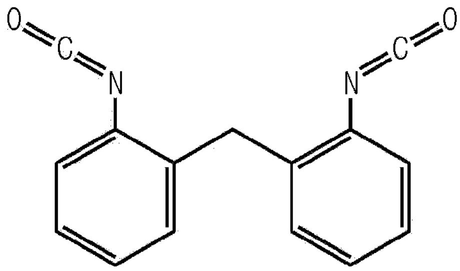

[Chemical Formula l]

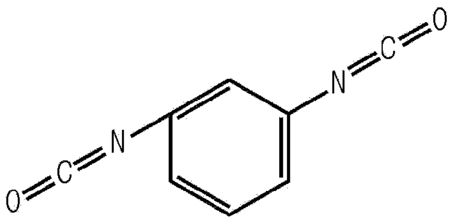

[Chemical Formula m]

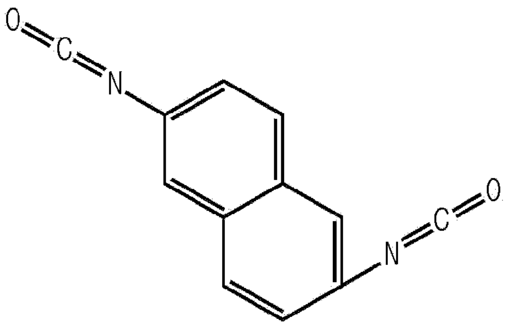

[Chemical Formula n]

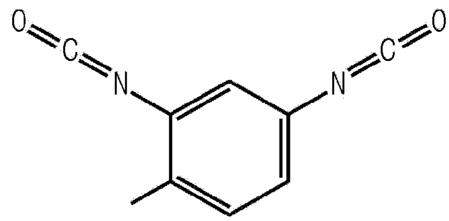

Particularly, unit A includes fluorine-substituted ether in its structure, and thus can realize the effects of improving the high-voltage safety, reducing the resistance of a battery and improving the ion conductivity through the anion-stabilizing and oxidation safety-enhancing effects.

Meanwhile, according to an embodiment of the present disclosure, the structure represented by Chemical Formula 2-2 may be any one selected from the following Chemical Formula o to Chemical Formula x:

[Chemical Formula o]

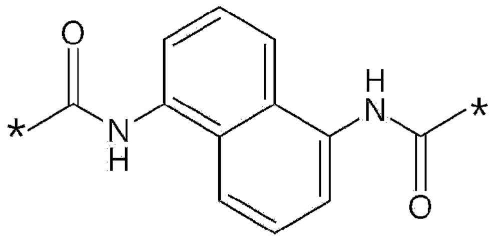

[Chemical Formula p]

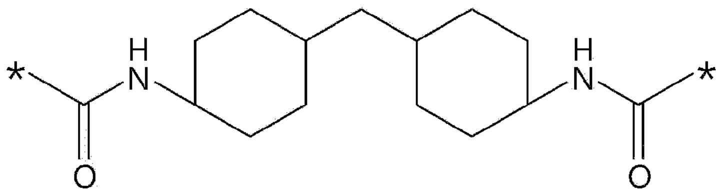

[Chemical Formula q]

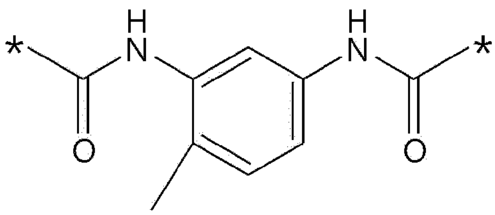

[Chemical Formula r]

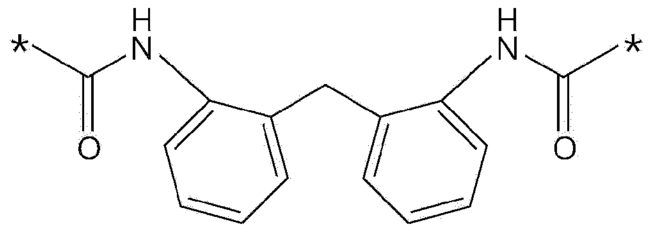

[Chemical Formula s]

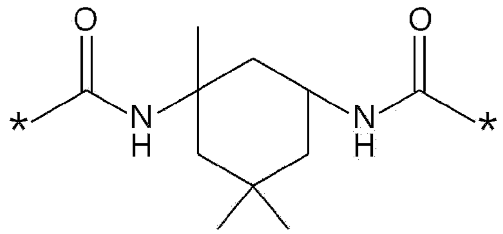

[Chemical Formula t]

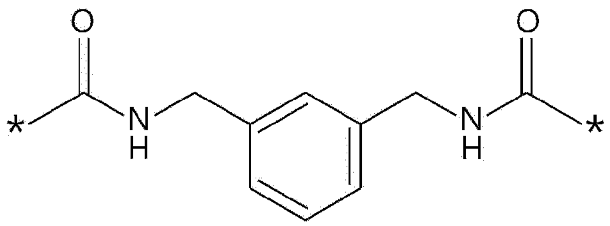

[Chemical Formula u]

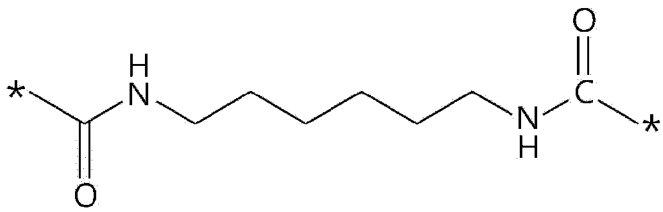

[Chemical Formula v]

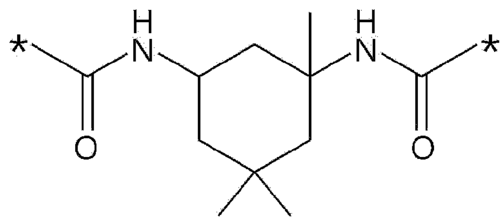

[Chemical Formula w]

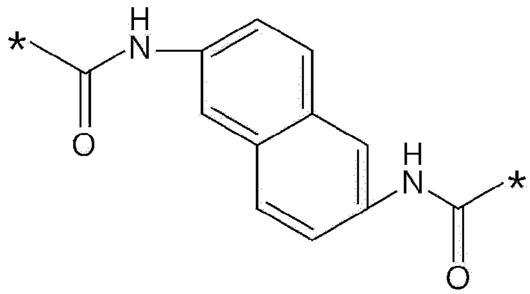

[Chemical Formula x]

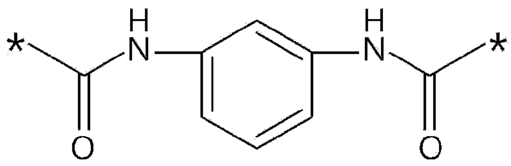

According to an embodiment of the present disclosure, unit B may be represented by the following Chemical Formula 3:

[Chemical Formula 3]

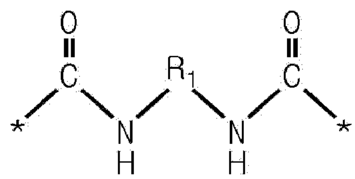

wherein each of the marks '*' present at both sides represents a site linked to each of the above-mentioned unit A-1 and unit C described hereinafter. Reference will be made to the above description of $R_1$ in Chemical Formula 2-2 about detailed description of $R_1$ in Chemical Formula 3.

Meanwhile, according to an embodiment of the present disclosure, the structure represented by Chemical Formula 3 may be a structure represented by any one of Chemical Formula o to Chemical Formula x, as described above.

According to an embodiment of the present disclosure, unit C may be represented by the following Chemical Formula 4:

[Chemical Formula 4]

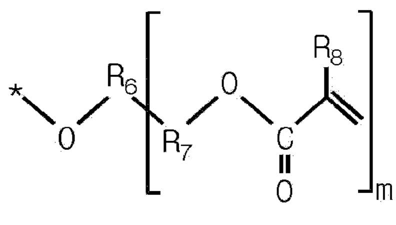

Herein, unit C is bound to both ends of the oligomer and provides a functional group capable of reacting with a crosslinking agent to both ends of the oligomer. In Chemical Formula 4, each of $R_6$ and $R_7$ independently may represent a C1-C5 linear or branched alkyl group. According to a particular embodiment, $R_6$ may represent a C2-C4 linear or branched alkyl group. In addition, $R_8$ is null or may represent a methyl group. Further, m is an integer selected from 1, 2, 3, 4 and 5. In other words, unit C is capable of providing (meth)acryloyl groups to both ends of the oligomer.

In the gel polymer electrolyte according to the present disclosure, as a typical example, the oligomer may include a compound represented by the following Chemical Formula 5:

[Chemical Formula 5]

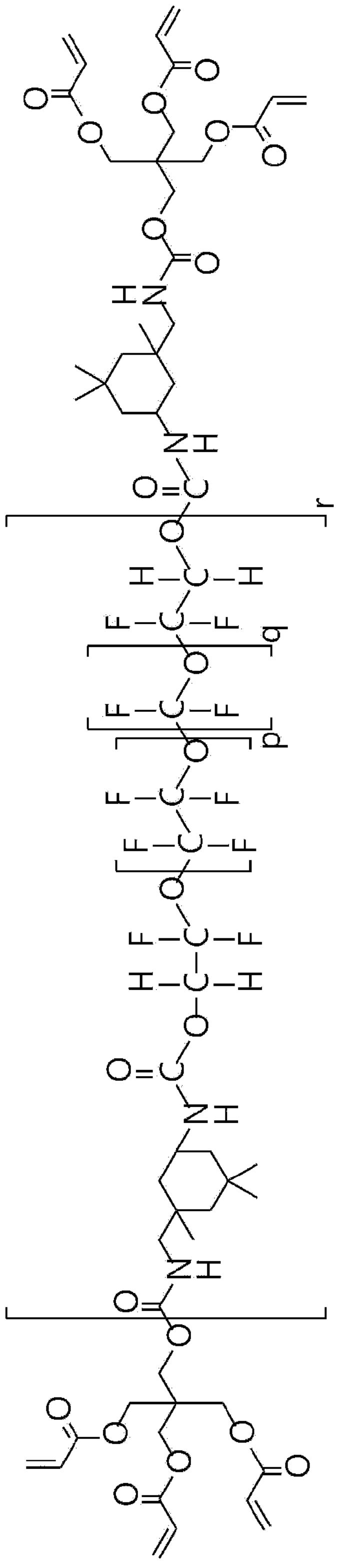

Hereinafter, the present disclosure will be explained in detail with reference to specific examples, but the following examples are for illustrative purposes only, and the scope of the present disclosure is not limited thereto.

The oligomer for forming the gel polymer electrolyte according to the present disclosure may have a weight average molecular weight (Mw) of about 1,000-500,000 g/mol, particularly 1,000-100,000 g/mol. When the weight

average molecular weight of the oligomer falls within the above-defined range, it is possible to effectively improve the mechanical strength of the battery including the oligomer.

When the weight average molecular weight of the copolymer falls within the above-defined range, it is possible to ensure the mechanical properties, processability (moldability), electrochemical stability, or the like. Herein, in unit A represented by the above Chemical Formula 1, p, q and r may be modified suitably according to the weight average molecular weight of the copolymer within the above-defined range.

Herein, the weight average molecular weight may be determined by using a gel permeation chromatography (GPC). For example, a sample having a predetermined concentration is prepared, and then a GPC analysis system, alliance 4 instrument, is stabilized. Once the instrument is stabilized, a reference sample and the sample are injected to the instrument to obtain chromatograms, and the molecular weight is calculated according to the analysis method (system: Alliance 4, column: Ultrahydrogel linear x 2, eluent: 0.1 M $NaNO_3$ (pH 7.0 phosphate buffer, flow rate: 0.1 mL/min, temp: 40°C, injection: 100 μL).

Meanwhile, when the gel polymer electrolyte according to the present disclosure is realized as a coating-type gel polymer electrolyte, the matrix polymer may further include inorganic particles in an amount of 5-700 parts by weight, particularly 100-400 parts by weight based on 100 parts by weight of the oligomer.

More preferably, the inorganic particles are present in an amount of 700 parts by weight or less in order to effectively improve the problem of an increase in the interfacial resistance with an electrode. When the inorganic particles are present in an amount of larger than 700 parts by weight, pores are formed in the electrolyte to cause degradation of the ion conductivity. When the content of the inorganic particles is less than 5 parts by weight, it is not possible to improve the electrochemical stability sufficiently, while ensuring the mechanical properties.

The matrix polymer is impregnated with the inorganic particles so that a high-viscosity solvent may infiltrate well through the pores formed by the vacant spaces among the inorganic particles. In other words, it is possible to obtain an effect of further improving the wettability with a high-viscosity solvent through the affinity between polar materials and capillary phenomenon.

The inorganic particles that may be used herein include those having a high dielectric constant and causing no oxidation and/or reduction in the range (e.g. 0-5V based on $Li/Li^+$) of operating voltage of an applicable electrochemical device. Particularly, typical examples of the inorganic particles include any one selected from the group consisting of $BaTiO_3$, $BaTiO_3$, $Pb(Zr,Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3$-$PbTiO_3$ (PMN-PT), hafnia ($HfO_2$), $SrTiO_3$, $SnO_2$, $CeO_2$, MgO, NiO, CaO, ZnO, $ZrO_2$, $Y_2O_3$, $Al_2O_3$, $TiO_2$, SiC, lithium phosphate ($Li_3PO_4$), lithium titanium phosphate ($Li_{x1}Ti_{y1}(PO_4)_3$, $0 < x1 < 2$, $0 < y1 < 3$), lithium aluminum titanium phosphate ($Li_{x2}Al_{y2}Ti_{z2}(PO_4)_3$, $0 < x2 < 2$, $0 < y2 < 1$, $0 < z2 < 3$), $(LiAlTiP)_{x3}O_{y3}$-based glass ($0 < x3 < 4$, $0 < y3 < 13$), such as $14Li_2O$-$9Al_2O_3$-$38TiO_2$-$39P_2O_5$, lithium lanthanum titanate ($Li_{x4}La_{y4}TiO_3$, $0 < x4 < y4 < 3$), lithium germanium thiophosphate ($Li_{x5}Ge_{y5}P_zS_w$, $0 < x5 < 4$, $0 < y5 < 1$, $0 < z < 1$, $0 < w < 5$), such as $Li_{3.25}Ge_{0.25}P_{0.75}S$, lithium nitride ($Li_{x6}N_{y6}$, $0 < x6 < 4$, $0 < y6 < 2$), such as $Li_3N$, $SiS_2$-based glass ($Li_{x7}Si_{y7}S_{z2}$, $0 < x7 < 3$, $0 < y7 < 2$, $0 < z2 < 4$), such as $Li_3PO_4$-$Li_2S$-$SiS_2$, $P_2S_5$-based glass ($Li_{x8}P_{y8}S_{z3}$, $0 < x8 < 3,0 < z3 < 7$), such as LiI-$Li_2S$-$P_2S_5$, and lithium lanthanum zirconium oxide ($Li_7La_3Zr_2O_{12}$, LLZO), or a mixture of two or more of them.

The inorganic particles preferably have an average particle diameter of about 0.001-10 μm so that they may be present in the gel polymer electrolyte with a uniform thickness and suitable porosity. When the average particle diameter is less than 0.001 μm, the inorganic particles may show low dispersibility. When the average particle diameter is larger than 10 μm, the porous coating layer may have an increased thickness, and agglomeration of the inorganic particles may occur, and thus the inorganic particles may be exposed to the outside of the gel polymer electrolyte, and the mechanical strength may be degraded. The gel polymer electrolyte according to the present disclosure may realize a $Li^+$ ion conductivity of $2.5\times10^{-4}$ S/Cm or more as determined by an impedance analysis system at a temperature of 25°C. Herein, the ion conductivity is determined by inserting the gel polymer electrolyte between a pair of platinum electrode discs having a diameter of 1 cm, and then measuring the ion conductivity of the gel polymer electrolyte through the alternating current impedance analysis method. The instrument used herein may be VMP3 model available from Bio Logic Co., and the ion conductivity may be determined under the conditions of 10,000-0.1 Hz and an amplitude of 10 mV, at room temperature.

In addition, the gel polymer electrolyte may have a $Li^+$ ion migration coefficient of 0.3 or more as determined by NMR at a temperature of 25°C. Herein, the $Li^+$ ion migration coefficient may be defined as $Li^+$ ion diffusion constant / ($Li^+$ ion diffusion constant + anion diffusion constant), wherein the $Li^+$ ion diffusion constant and anion diffusion constant may be determined by the following method and system. For example, Varian 500 MHz NMR/dual probe is used, the $Li^+$ ion (cation) diffusion constant is determined by $^7Li$ diffusion NMR, and the anion diffusion constant is determined by $^{19}F$ diffusion NMR. The solvent used herein is acetone-$d_6$, and the sample is prevented from being mixed with the deuterium solvent by using an inner tube (acetone-$d_6$) in order to determine the diffusion value in the sample itself. In addition, in this experiment, a stimulated echo with gradient pulse is used as a pulse sequence. The gradient amplitude is controlled in such a manner that the peak intensity at the highest gradient power may be about 2-5% based on the peak intensity at the lowest gradient power, and the corresponding range is divided into 16 steps in the same manner as solution NMR so that 16 different amplitudes may be applied to each sample.

In addition, the gel polymer electrolyte may have a gel content of about 1 wt% or more, particularly about 20 wt% or more, at a temperature of 25°C. The gel content may refer to the weight of the remaining ingredients of the gel polymer electrolyte other than the electrolyte.

Further, the gel polymer electrolyte preferably shows a content of unreacted oligomer of 20 wt% or less based on the total input of the reactive oligomer at a temperature of 25°C.

Herein, the content of unreacted oligomer may be determined by preparing the gel polymer electrolyte, extracting the gel polymer electrolyte with a solvent (acetone) and analyzing the extracted solvent by NMR.

Meanwhile, in the gel polymer electrolyte according to the present disclosure, the electrolyte with which the matrix polymer is impregnated includes a nonaqueous solvent containing a conventionally used lithium salt, wherein the lithium salt may be any one selected from the group consisting of $LiPF_6$, $LiBF_4$, $LiSbF_6$, $LiAsF_6$, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiTFSI, LiFSI and $LiClO_4$, or a mixture of two or more of them, but is not limited thereto.

The lithium salt maybe present at a concentration of 1-2 M in the electrolyte, or in an amount of 10-50 wt% based on the total content of the oligomer.

In addition, the electrolyte solvent used according to the present disclosure may be a nonaqueous solvent used conventionally for an electrolyte for a lithium secondary battery, and typical examples thereof include at least one compound selected from cyclic carbonate-based compounds, linear carbonate-based compounds, alkyl ether-based compounds, alkyl acetate-based compounds, alkyl propionate-based compounds and nitrile-based compounds. Herein, the cyclic carbonate-based compound may include at least one selected from the group consisting of ethylene carbonate (EC), propylene carbonate (PC), butylene carbonate (BC) and fluoroethylene carbonate (FEC).

The alkyl ether-based compound may include at least one selected from the group consisting of dimethyl ether, diethyl ether, dipropyl ether, methyl ethyl ether, methyl propyl ether and ethyl propyl ether.

The alkyl acetate-based compound may include at least one selected from the group consisting of methyl acetate, ethyl acetate and propyl acetate.

The alkyl propionate-based compound may include at least one selected from the group consisting of methyl propionate, ethyl propionate, propyl propionate and butyl propionate.

The nitrile-based compound may include at least one selected from the group consisting of acetonitrile, propionitrile, butyronitrile, valeronitrile, caprilonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile and 4-fluorophenylacetonitrile.

Particularly, among the carbonate-based electrolyte solvents, propylene carbonate and ethylene carbonate, which are cyclic carbonates, are high-viscosity organic solvents, have a high dielectric constant and can dissociate the lithium salt in the electrolyte well, and thus may be used preferably. When using such a cyclic carbonate in the form of a mixture with a low-viscosity and low-dielectric constant linear carbonate, such as ethylmethyl carbonate, diethyl carbonate or dimethyl carbonate at a suitable mixing ratio, it is possible to prepare an electrolyte having high electrical conductivity preferably.

In addition, the electrolyte solvent may further include an additive used conventionally for an electrolyte to improve the quality. For example, the electrolyte solvent may further include conventional additives, such as vinylene carbonate (VC), 1,3-propanesultone (PS), succinonitrile (SN), ethylene sulfate (ESa), 1,3-propenesulfone (PRS), fluoroethylene carbonate (FEC), adiponitrile (AND), $LiPO_2F_2$, lithium difluoro bis(oxalate)phosphate (LiODFB), lithium bis(oxalate)borate (LiBOB), (trimethylsilyl)propyl phosphate (TMSPa), (trimethylsilyl)propyl phosphite (TMSPi), TEEPa, TFEPi, or the like, with no particular limitation.

While the conventional electrolyte causes deposition of the metal ion eluted from the positive electrode at the negative electrode, the gel polymer electrolyte according to the present disclosure includes the matrix polymer formed from the oligomer, and thus can ensure the effects of improving the mechanical properties, enhancing the high-voltage safety, reducing the battery resistance and improving the ion conductivity. Therefore, it is possible to obtain a lithium secondary battery having improved life and capacity characteristics. Moreover, it is possible to form a protective layer including a polymer on the surfaces of the positive electrode and negative electrode, to inhibit side reactions through the anion stabilization using the polymer structure, to enhance the adhesion to the electrode, and to inhibit gas generation in the battery at high temperature. Further, it is possible to reinforce a separator with the gel polymer electrolyte, thereby providing improved penetration stability, and it is possible to realize the effect of improving the stability, such as overcharge stability, by enhancing the flame resistance and reducing the volatility.

In another aspect of the present disclosure, there is provided a composition for a gel polymer electrolyte, including a lithium salt, an electrolyte solvent, a polymerization initiator, and the oligomer including the above-mentioned unit A to unit C.

The oligomer may be present in an amount of 0.5-20 wt%, preferably 0.5-10 wt%, based on the total weight of the composition for a gel polymer electrolyte. When the content of the oligomer is less than 0.5 wt%, it is difficult to perform gelling and to realize the characteristics of the gel polymer electrolyte. When the content of the oligomer is larger than 20

wt%, the resistance is increased due to the excessive amount of the oligomer to cause degradation of the battery performance.

In addition, the gel polymer electrolyte according to the present disclosure may be obtained from the composition for a gel polymer electrolyte by using a polymerization process known to those skilled in the art.

As a polymerization initiator used for the reaction may include any conventional polymerization initiator known to those skilled in the art.

Examples of the polymerization initiator include, but are not limited to: organic peroxides or hydroperoxides, such as benzoyl peroxide, acetyl peroxide, dilauryl peroxide, di-tert-butylperoxide, t-butyl peroxy-2-ethyl-hexanoate, cumyl hydroperoxide and hydrogen peroxide; azo compounds, such as 2,2'-azobis(2-cyanobutane), 2,2'-azobis(methylbutyronitrile), 2,2'-azobis(iso-butyronitrile) (AIBN), 2,2'-azobisdimethyl valeronitrile (AMVN), or the like.

The polymerization initiator may be decomposed by heating, for example, heating at 30-100°C, or may be decomposed at room temperature (5-30°C) to form radicals, and the polymerizable oligomer may react with an acrylate-based compound through free radical polymerization to form a gel polymer electrolyte.

In addition, the polymerization initiator may be used in an amount of 0.01-5 parts by weight based on 100 parts by weight of the oligomer. When the content of the polymerization initiator is larger than 5 parts by weight, there is a disadvantage in that gelling occurs too quickly during the injection of the composition for a gel polymer electrolyte into a battery, or unreacted initiator remains and adversely affects the performance of a battery later. On the other hand, when the content of the polymerization initiator is less than 0.1 parts by weight, gelling cannot be performed sufficiently.

Meanwhile, as described above, the lithium salt may include any one selected from the group consisting of $LiPF_6$, $LiBF_4$, $LiSbF_6$, $LiAsF_6$, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiTFSI, LiFSI and $LiClO_4$, or a mixture of two or more of them, but is not limited thereto.

In addition, as described above, the electrolyte solvent may include a nonaqueous solvent used conventionally for an electrolyte for a lithium secondary battery. For example, the electrolyte solvent may include at least one compound selected from the group consisting of a cyclic carbonate-based compound, a linear carbonate-based compound, an alkyl ether-based compound, an alkyl acetate-based compound, an alkyl propionate-based compound and a nitrile-based compound.

Among them, typically, the electrolyte solvent may include a carbonate compound which is a cyclic carbonate, a linear carbonate or a mixture thereof.

In addition, in order to further impart additional effects, such as the effects of enhancing the efficiency of gelling reaction and reducing the resistance, the composition for a gel polymer electrolyte according to an embodiment of the present disclosure may optionally further include other additives capable of realizing such physical properties and known to those skilled in the art, besides the above-described ingredients.

As described above, the additives may include conventional additives, such as VC, VEC, PS, SN, AdN, ESa, PRS, FEC, $LiPO_2F_2$, LiODFB, LiBOB, TMSPa, TMSPi, TFEPa, TFEPi, or the like.

In still another aspect of the present disclosure, there is provided a lithium secondary battery, including:

a positive electrode and a negative electrode; and
a polymer electrolyte disposed between the positive electrode and the negative electrode, wherein the polymer electrolyte includes the gel polymer electrolyte according to the present disclosure.

The gel polymer electrolyte is formed through the polymerization of a composition for a gel polymer electrolyte according to a conventional method known to those skilled in the art. For example, the gel polymer electrolyte may be formed through the in-situ polymerization of the composition for a gel polymer electrolyte in a secondary battery.

According to a more preferred embodiment, the gel polymer electrolyte may be prepared by the method including the steps of: (a) inserting an electrode assembly including a positive electrode, a negative electrode and a separator interposed between the positive electrode and the negative electrode to a battery casing; and (b) injecting the composition for a gel polymer electrolyte according to the present disclosure to the battery casing and carrying out polymerization to form a gel polymer electrolyte.

Such in-situ polymerization in the lithium secondary battery may be carried out through an electron beam (E-beam), gamma ray and room-temperature/high-temperature aging process. According to an embodiment of the present disclosure, the in-situ polymerization may be carried out through thermal polymerization. Herein, the polymerization time may be about 2 minutes to 12 hours, and the thermal polymerization temperature may be set to 30-100°C.

More particularly, the in-situ polymerization in the lithium secondary battery may be carried out by adding a predetermined amount of the polymerization initiator and the oligomer to a lithium salt-containing electrolyte, followed by mixing, and injecting the resultant electrolyte to a battery cell. Then, the injection port of the battery cell is sealed, and heating is carried out at 40-80°C for 1-20 hours to perform polymerization. In this manner, the lithium salt-containing electrolyte undergoes gelling, and then a gel polymer electrolyte is prepared.

The lithium secondary battery according to an embodiment of the present disclosure has a charge voltage of

3.0-5.0 V, and shows excellent capacity characteristics in both a general voltage zone and a high voltage zone.

Meanwhile, according to an embodiment of the present disclosure, the electrodes forming the lithium secondary battery may be obtained by a conventional method known to those skilled in the art. For example, an electrode active material is mixed and agitated with a solvent and optionally with a binder, a conductive material and a dispersant to prepare a slurry, and the slurry is applied (coated) onto a current collector made of a metal, followed by compression and drying, to obtain an electrode.

The positive electrode may be obtained by forming a positive electrode mixture layer on a positive electrode current collector. The positive electrode mixture layer may be formed by coating a positive electrode slurry containing a positive electrode active material, a binder, a conductive material, a solvent, or the like onto a positive electrode current collector, followed by drying and pressing.

The positive electrode current collector is not particularly limited, as long as it has conductivity, while not causing any chemical change in the corresponding battery. Particular examples of the positive electrode current collector include stainless steel, aluminum, nickel, titanium, baked carbon, aluminum or stainless steel surface-treated with carbon, nickel, titanium, silver, or the like.

The positive electrode active material may include a compound capable of reversible intercalation/deintercalation of lithium, and particularly, may include a lithium composite metal oxide containing at least one metal, such as cobalt, manganese, nickel or aluminum, and lithium. More particularly, the lithium composite metal oxide may include lithium manganese-based oxides (e.g. $LiMnO_2$, $LiMn_2O_4$, or the like), lithium cobalt-based oxides (e.g. $LiCoO_2$, or the like), lithium nickel-based oxides (e.g. $LiNiO_2$, or the like), lithium nickel manganese-based oxides (e.g. $LiNi_{1-Y9}Mn_{Y9}O_2$ (wherein $0 < Y9 < 1$), $LiMn_{2-z4}Ni_{z4}O_4$ (wherein $0 < Z4 < 2$), or the like), lithium nickel cobalt-based oxides (e.g. $LiNi_{1-Y10}Co_{Y10}O_2$ (wherein $0 < Y10 < 1$), or the like), lithium manganese cobalt-based oxides (e.g. $LiCo_{1-Y11}Mn_{Y11}O_2$ (wherein $0 < Y11 < 1$), $LiMn_{2-z5}Co_{z5}O_4$ (wherein $0 < Z5 < 2$), or the like), lithium nickel manganese cobalt-based oxides (e.g. $Li(Ni_aCo_bMn_c)O_2$ (wherein $0 < a < 1$, $0 < b < 1$, $0< c < 1$, $a + b + c = 1$), $Li(Ni_{a1}Co_{b1}Mn_{c1})O_4$ (wherein $0 < a1 < 2$, $0 < b1 < 2$, $0 < c1 < 2$, $a1 + b1 + c1 = 2$), or the like), lithium nickel cobalt transition metal (M) oxides (e.g. $Li(Ni_{a2}Co_{b2}Mn_{c2}M_d)O_2$ (wherein M is selected from the group consisting of Al, Fe, V, Cr, Ti, Ta, Mg and Mo, each of a2, b2, c2 and d represents the atomic fraction of each independent element, and $0 < a2 < 1$, $0 < b2 < 1$, $0 < c2 < 1$, $0 < d < 1$, $a2 + b2 + c2 + d = 1$), or the like), or the like, and any one of them, or two or more of the compounds may be used.

Among them, with a view to improvement of the capacity characteristics and stability of a battery, the lithium composite metal oxide may include $LiCoO_2$, $LiMnO_2$, $LiNiO_2$, lithium nickel manganese cobalt oxides (e.g. $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, or the like), nickel manganese cobalt aluminum compounds (e.g. $Li(Ni_{0.86}Mn_{0.045}CoAl_{o0.045}Al_{0.05})O_2)$), lithium nickel cobalt aluminum oxides (e.g. $Li(Ni_{0.8}Co_{0.15}Al_{0.05})O_2$, or the like), or the like.

The positive electrode active material may be present in an amount of 80-99 wt% based on the total weight of the solid content of the positive electrode slurry.

The binder is an ingredient that assists the binding of the active material with the conductive material and the binding with a current collector. In general, the binder is added in an amount of 1-30 wt% based on the total weight of the solid content of the positive electrode slurry. Particular examples of the binder include: polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluororubber, various copolymers, or the like.

The conductive material is added generally in an amount of 1-30 wt% based on the total weight of the solid content of the positive electrode slurry.

The conductive material is not particularly limited, as long as it has conductivity while not causing any chemical change in the corresponding battery. Particular examples of the conductive material include: graphite; carbonaceous materials, such as carbon black, acetylene black, ketjen black, channel black, furnace black, lamp black or thermal black; conductive fibers, such as carbon fibers or metal fibers; fluorocarbon; metal powder, such as aluminum or nickel powder; conductive whisker, such as zinc oxide or potassium titanate; conductive metal oxide, such as titanium dioxide; conductive material such as a polyphenylene derivative; or the like. Particular examples of commercially available products of conductive materials may include acetylene black (available from Chevron Chemical Company), denka black (available from Denka Singapore Private Limited or Gulf Oil Company), ketj en Black EC (available from Armak Company), Vulcan XC-72 (available from Cabot Company), Super P (available from MMM Company), or the like.

The solvent may include an organic solvent, such as N-methyl-2-pyrrolidone (NMP), and may be added in such an amount that the solvent including the positive electrode active material optionally with the binder, the conductive material, or the like, may have a desired level of viscosity. For example, the solvent may be added in such a manner that the slurry including the positive electrode active material optionally with the binder, the conductive material, or the like, may have a solid content of 40-60 wt%, preferably 40-50 wt%.

In addition, the negative electrode may be obtained by forming a negative electrode mixture layer on a positive electrode current collector. The negative electrode mixture layer may be formed by coating a negative electrode slurry

containing a negative electrode active material, a binder, a conductive material, a solvent, or the like onto a negative electrode current collector, followed by drying and pressing.

The negative electrode current collector generally has a thickness of 3-500 μm. The negative electrode current collector is not particularly limited, as long as it has high conductivity, while not causing any chemical change in the corresponding battery. Particular examples of the negative electrode current collector include copper, stainless steel, aluminum, nickel, titanium, baked carbon, copper or stainless steel surface-treated with carbon, nickel, titanium, silver, etc., aluminum-cadmium alloy, or the like. In addition, similarly to the positive electrode current collector, fine surface irregularities may be formed on the surface of the negative electrode current collector to enhance the binding force of the negative electrode active material. For example, the negative electrode current collector may have various shapes, such as a film, a sheet, a foil, a net, a porous body, a foam body or a non-woven web body.

In addition, the negative electrode active material may include any one selected from the group consisting of: lithiated titanium composite oxide (LTO); a carbonaceous material, such as non-graphitizable carbon or graphite-based carbon; metal composite oxides, such as $Li_{x10}Fe_2O_3$ ($0 \leq x10 \leq 1$), $Li_{x11}WO_2$ ($0 \leq x11 \leq 1$) and $Sn_{x12}Me_{1-x12}Me'_{y12}O_{z12}$ (Me: Mn, Fe, Pb, Ge; Me': Al, B, P, Si, elements of Group 1, 2 or 3 in the Periodic Table, halogen; $0 < x12 \leq 1$; $1 \leq y12 \leq 3$; $1 \leq z12 \leq 8$); lithium metal; lithium alloy; silicon-based alloy; tin-based alloy; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; and conductive polymers, such as polyacetylene, or a mixture of two or more of them.

The negative electrode active material may be used in an amount of 80-99 wt% based on the total weight of the solid content of the negative electrode slurry.

The binder is an ingredient that assists the binding among the conductive material, the active material and the current collector. In general, the binder is added in an amount of 1-30 wt% based on the total weight of the solid content of the negative electrode slurry. Particular examples of the binder include: polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluororubber, various copolymers thereof, or the like.

The conductive material is an ingredient used for further improving the conductivity of the negative electrode active material, and may be added in an amount of 1-20 wt% based on the total weight of the solid content of the negative electrode slurry. The conductive material is not particularly limited, as long as it has conductivity while not causing any chemical change in the corresponding battery. Particular examples of the conductive material include: graphite, such as natural graphite or artificial graphite; carbon black, such as acetylene black, ketjen black, channel black, furnace black, lamp black or thermal black; conductive fibers, such as carbon fibers or metal fibers; fluorocarbon; metal powder, such as aluminum or nickel powder; conductive whisker, such as zinc oxide or potassium titanate; conductive metal oxide, such as titanium dioxide; conductive material, such as a polyphenylene derivative; or the like.

The solvent may include water or an organic solvent, such as N-methyl-2-pyrrolidone (NMP), alcohol, or the like, and may be added in such an amount that the solvent including the negative electrode active material optionally with the binder, the conductive material, or the like, may have a desired level of viscosity. For example, the solvent may be added in such a manner that the slurry including the negative electrode active material optionally with the binder, the conductive material, or the like, may have a solid content of 50-75 wt%, preferably 50-65 wt%.

Then, a separator is introduced between the positive electrode and the negative electrode.

The separator functions to interrupt an internal short-circuit between both electrodes and to allow wetting with an electrolyte. A separator film may be formed by mixing a polymer resin, a filler and a solvent to prepare a separator composition, and coating the separator composition directly on the top of an electrode, followed by drying. In a variant, the separator composition may be cast and dried on a support, and a separator film peeled from the support may be laminated on the top of an electrode.

The polymer resin is not particularly limited. For example, there may be used a sheet or nonwoven web made of an olefin-based polymer, such as polypropylene having chemical resistance and hydrophobicity; a composite porous separator including an inorganic material added to a porous separator substrate; a sheet or nonwoven web made of glass fibers or polyethylene, or the like.

In general, the porous separator may have a pore diameter of 0.01-50 μm and a porosity of 5-95%. In addition, the porous separator may have a thickness of 5-300 μm.

There is no particular limitation in the outer shape of the lithium secondary battery according to an embodiment of the present disclosure. For example, the lithium secondary battery may have a cylindrical shape using a can, a prismatic shape, a pouch-like shape or a coin-like shape.

MODE FOR DISCLOSURE

[Examples]

## Example 1 (Positive Electrode Active Material NCMA)

### (1) Preparation of Composition for Gel Polymer Electrolyte

First, ethylene carbonate (EC) was mixed with ethyl methyl carbonate (EMC) at a volume ratio of 3:7, and 0.5 M of $LiPF_6$ and 0.5 M of LiFSI were introduced to the resultant mixture to prepare a mixed solvent. Next, the oligomer (weight average molecular weight 6000, p:q = 2: 1, r = 3) based on Chemical Formula 5 was introduced to a content of 5 wt% based on 100 wt% of a composition for a gel polymer electrolyte. In addition, 0.1 wt% of a polymerization initiator (AIBN), 1.5 wt% of vinylene carbonate (VC) and 1 wt% of propane sultone (PS) were added thereto to prepare a composition for a gel polymer electrolyte. The following Table 1 shows the ingredients of the composition for a gel polymer electrolyte according to Example 1 and the content of each ingredient.

[Table 1]

| | Composition for gel polymer electrolyte 100 wt% |
|---|---|
| EC and EMC ($LiPF_6$ 0.5 M, LiFSI 0.5 M) | 92.4 wt% |
| Oligomer of Chemical Formula 5 (weight average molecular weight 6000) | 5 wt% |
| Polymerization initiator (AIBN) | 0.1 wt% |
| Vinylene carbonate (VC) | 1.5 wt% |
| PS (propane sultone) | 1 wt% |

### (2) Manufacture of Lithium Secondary Battery

First, 94 wt% of $LiNi_{0.86}Co_{0.045}Mn_{0.045}Al_{0.05}O_2$ as a positive electrode active material, 3 wt% of carbon black as a conductive material and 3 wt% of polyvinylidene fluoride (PVDF) as a binder were added to N-methyl-2-pyrrolidone (NMP) as a solvent to obtain a positive electrode mixture slurry. The positive electrode mixture slurry was applied to and dried on aluminum (Al) foil having a thickness of about 20 μm as a positive electrode current collector, followed by roll pressing, to obtain a positive electrode.

In addition, 96 wt% of carbon powder as a negative electrode active material, 3 wt% of PVDF as a binder and 1 wt% of carbon black as a conductive material were added to NMP as a solvent to obtain a negative electrode mixture slurry. The negative electrode mixture slurry was applied to and dried on copper (Cu) foil having a thickness of 10 μm as a negative electrode current collector, followed by roll pressing, to obtain a negative electrode.

The positive electrode, the negative electrode and a separator including three layers of polypropylene/polyethylene/polypropylene (PP/PE/PP) were used to obtain an electrode assembly. Then, the composition for a gel polymer electrolyte prepared as described above was injected to the electrode assembly, and the electrode assembly was allowed to stand for 2 days and then heated at 60°C for 24 hours to obtain a lithium secondary battery including a gel polymer electrolyte. The resultant battery had a nominal voltage of 2.5-4.2 V.

## Example 2 (Positive Electrode Active Material LCO)

### (1) Preparation of Composition for Gel Polymer Electrolyte

A composition for a gel polymer electrolyte was prepared in the same manner as Example 1, except that the composition as shown in the following Table 2 was used.

[Table 2]

| | Composition for gel polymer electrolyte 100 wt% |
|---|---|
| EC and EMC ($LiPF_6$ 0.5 M, LiFSI 0.5 M) | 94.4 wt% |

(continued)

| | Composition for gel polymer electrolyte 100 wt% |
|---|---|
| Oligomer of Chemical Formula 5 (weight average molecular weight 6000) | 2 wt% |
| Polymerization initiator (AIBN) | 0.1 wt% |
| Vinylene carbonate (VC) | 1.5 wt% |
| PS (propane sultone) | 1 wt% |

**(2) Manufacture of Lithium Secondary Battery**

First, 94 wt% of $LiCoO_2$ (LCO) as a positive electrode active material, 3 wt% of carbon black as a conductive material and 3 wt% of polyvinylidene fluoride (PVDF) as a binder were added to N-methyl-2-pyrrolidone (NMP) as a solvent to obtain a positive electrode mixture slurry. The positive electrode mixture slurry was applied to and dried on aluminum (Al) foil having a thickness of about 20 μm as a positive electrode current collector, followed by roll pressing, to obtain a positive electrode.

In addition, 96 wt% of carbon powder as a negative electrode active material, 3 wt% of PVDF as a binder and 1 wt% of carbon black as a conductive material were added to NMP as a solvent to obtain a negative electrode mixture slurry. The negative electrode mixture slurry was applied to and dried on copper (Cu) foil having a thickness of 10 μm as a negative electrode current collector, followed by roll pressing, to obtain a negative electrode.

The positive electrode, the negative electrode and a separator including three layers of polypropylene/polyethylene/polypropylene (PP/PE/PP) were used to obtain an electrode assembly. Then, the composition for a gel polymer electrolyte prepared as described above was injected to the electrode assembly, and the electrode assembly was allowed to stand for 2 days and then heated at 60°C for 24 hours to obtain a lithium secondary battery including a gel polymer electrolyte. The resultant battery had a nominal voltage of 3.0-4.45 V.

**Example 3 (Positive Electrode Active Material LFP)**

**(1) Preparation of Composition for Gel Polymer Electrolyte**

First, ethylene carbonate (EC), dimethyl carbonate (DMC) and ethyl methyl carbonate (EMC) were mixed at a volume ratio of 3:4:3, and 1 M of $LiPF_6$ was introduced to the resultant mixture to prepare a mixed solvent. Next, the oligomer (weight average molecular weight 6000, p:q = 2: 1, r = 3) based on Chemical Formula 5 was introduced to a content of 3 wt% based on 100 wt% of a composition for a gel polymer electrolyte. In addition, 0.1 wt% of a polymerization initiator (AIBN) and 2.5 wt% of vinylene carbonate (VC) were added thereto to prepare a composition for a gel polymer electrolyte. The following Table 3 shows the ingredients of the composition for a gel polymer electrolyte according to Example 3 and the content of each ingredient.

[Table 3]

| | Composition for gel polymer electrolyte 100 wt% |
|---|---|
| EC, DMC and EMC ($LiPF_6$ 1 M) | 94.4 wt% |
| Oligomer of Chemical Formula 5 (weight average molecular weight 6000) | 3 wt% |
| Polymerization initiator (AIBN) | 0.1 wt% |
| Vinylene carbonate (VC) | 2.5 wt% |

**(2) Manufacture of Lithium Secondary Battery**

First, 94 wt% of $LiFePO_4$ (LFP) as a positive electrode active material, 3 wt% of carbon black as a conductive material and 3 wt% of polyvinylidene fluoride (PVDF) as a binder were added to N-methyl-2-pyrrolidone (NMP) as a solvent to obtain a positive electrode mixture slurry. The positive electrode mixture slurry was applied to and dried on aluminum (Al) foil having a thickness of about 20 μm as a positive electrode current collector, followed by roll pressing, to obtain a positive electrode.

In addition, 96 wt% of carbon powder as a negative electrode active material, 3 wt% of PVDF as a binder and 1

wt% of carbon black as a conductive material were added to NMP as a solvent to obtain a negative electrode mixture slurry. The negative electrode mixture slurry was applied to and dried on copper (Cu) foil having a thickness of 10 μm as a negative electrode current collector, followed by roll pressing, to obtain a negative electrode.

The positive electrode, the negative electrode and a separator including three layers of polypropylene/polyethylene/polypropylene (PP/PE/PP) were used to obtain an electrode assembly. Then, the composition for a gel polymer electrolyte prepared as described above was injected to the electrode assembly, and the electrode assembly was allowed to stand for 2 days and then heated at 60°C for 24 hours to obtain a lithium secondary battery including a gel polymer electrolyte. The resultant battery had a nominal voltage of 2.5-3.6 V. The battery had a capacity of 720 mAh.

## Comparative Example 1 (Use of Liquid Electrolyte, NCMA)

### (1) Preparation of Liquid Electrolyte

First, ethylene carbonate (EC) was mixed with dimethyl carbonate (DMC) at a volume ratio of 3:7, and 1.0 M of $LiPF_6$ was introduced to the resultant mixture to prepare a mixed solvent. Then, 1.6 g of VC and 1.5 g of PS as other additives were added to 97 g of the mixed solvent to prepare a liquid electrolyte. The following Table 4 shows the ingredients of the composition for an electrolyte according to Comparative Example 1 and the content of each ingredient.

[Table 4]

| | Liquid electrolyte 100 wt% |
|---|---|
| EC and EMC ($LiPF_6$ 1 M) | 97 wt% |
| Oligomer of Chemical Formula 5 (weight average molecular weight 6000) | 0 wt% |
| Polymerization initiator (AIBN) | 0 wt% |
| Vinylene carbonate (VC) | 1.5 wt% |
| PS (propane sultone) | 1 wt% |

### (2) Manufacture of Lithium Secondary Battery

First, 94 wt% of $LiNi_{0.86}Co_{0.045}Mn_{0.045}Al_{0.05}O_2$ as a positive electrode active material, 3 wt% of carbon black as a conductive material and 3 wt% of polyvinylidene fluoride (PVDF) as a binder were added to N-methyl-2-pyrrolidone (NMP) as a solvent to obtain a positive electrode mixture slurry. The positive electrode mixture slurry was applied to and dried on aluminum (Al) foil having a thickness of about 20 μm as a positive electrode current collector, followed by roll pressing, to obtain a positive electrode.

In addition, 96 wt% of carbon powder as a negative electrode active material, 3 wt% of PVDF as a binder and 1 wt% of carbon black as a conductive material were added to NMP as a solvent to obtain a negative electrode mixture slurry. The negative electrode mixture slurry was applied to and dried on copper (Cu) foil having a thickness of 10 μm as a negative electrode current collector, followed by roll pressing, to obtain a negative electrode.

The positive electrode, the negative electrode and a separator including three layers of polypropylene/polyethylene/polypropylene (PP/PE/PP) were used to obtain an electrode assembly. Then, the liquid electrolyte prepared as described above was injected to the electrode assembly to obtain a lithium secondary battery.

## Comparative Example 2 (Use of Liquid Electrolyte, LCO)

A lithium secondary battery was obtained in the same manner as Comparative Example 1, except that $LiCoO_2$ (LCO) was used as a positive electrode active material.

## Comparative Example 3 (Use of Liquid Electrolyte, LFP)

### (1) Preparation of Liquid Electrolyte

A liquid electrolyte was prepared by using the composition as shown in the following Table 5.

[Table 5]

| | Liquid electrolyte 100 wt% |
|---|---|
| EC, DMC and EMC ($LiPF_6$ 1M) | 97.5 wt% |
| Vinylene carbonate (VC) | 2.5 wt% |

**(2) Manufacture of Lithium Secondary Battery**

First, 94 wt% of $LiFePO_4$ (LFP) as a positive electrode active material, 3 wt% of carbon black as a conductive material and 3 wt% of polyvinylidene fluoride (PVDF) as a binder were added to N-methyl-2-pyrrolidone (NMP) as a solvent to obtain a positive electrode mixture slurry. The positive electrode mixture slurry was applied to and dried on aluminum (Al) foil having a thickness of about 20 $\mu$m as a positive electrode current collector, followed by roll pressing, to obtain a positive electrode.

In addition, 96 wt% of carbon powder as a negative electrode active material, 3 wt% of PVDF as a binder and 1 wt% of carbon black as a conductive material were added to NMP as a solvent to obtain a negative electrode mixture slurry. The negative electrode mixture slurry was applied to and dried on copper (Cu) foil having a thickness of 10 $\mu$m as a negative electrode current collector, followed by roll pressing, to obtain a negative electrode.

The positive electrode, the negative electrode and a separator including three layers of polypropylene/polyethylene/polypropylene (PP/PE/PP) were used to obtain an electrode assembly. Then, the liquid electrolyte prepared as described above was injected to the electrode assembly to obtain a lithium secondary battery. The resultant battery had a nominal voltage of 2.5-3.6 V. The battery had a capacity of 720 mAh.

**Comparative Example 4 (Use of Gel Polymer Electrolyte, LFP)**

**(1) Preparation of Composition for Gel Polymer Electrolyte**

First, ethylene carbonate (EC), dimethyl carbonate (DMC) and ethyl methyl carbonate (EMC) were mixed at a volume ratio of 3:4:3, and 1 M of $LiPF_6$ was introduced to the resultant mixture to prepare a mixed solvent. Next, the oligomer (weight average molecular weight 6000, m2:n2 = 2: 1, o2 = 6) represented by the following Chemical Formula z was introduced to a content of 3 wt% based on 100 wt% of a composition for a gel polymer electrolyte. In addition, 0.1 wt% of a polymerization initiator (AIBN) and 2.5 wt% of vinylene carbonate (VC) were added thereto to prepare a composition for a gel polymer electrolyte.

[Chemical Formula z]

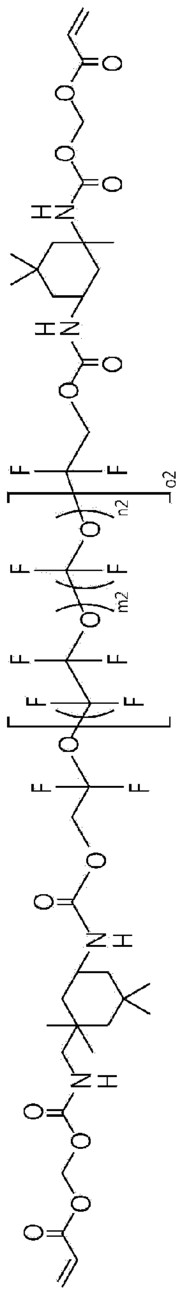

wherein each of m2, n2 and o2 represents the number of a repeating unit, m2 is an integer of 1-10, n2 is an integer of 1-10, and o2 is an integer of 1-500.

[Table 6]

| | Composition for gel polymer electrolyte 100 wt% |
|---|---|
| EC, DMC and EMC ($LiPF_6$ 1 M) | 94.4 wt% |
| Oligomer of Chemical Formula z (weight average molecular weight 6000) | 3 wt% |
| Polymerization initiator (AIBN) | 0.1 wt% |
| Vinylene carbonate (VC) | 2.5 wt% |

### (2) Manufacture of Lithium Secondary Battery

First, 94 wt% of $LiFePO_4$ (LFP) as a positive electrode active material, 3 wt% of carbon black as a conductive material and 3 wt% of polyvinylidene fluoride (PVDF) as a binder were added to N-methyl-2-pyrrolidone (NMP) as a solvent to obtain a positive electrode mixture slurry. The positive electrode mixture slurry was applied to and dried on aluminum (Al) foil having a thickness of about 20 μm as a positive electrode current collector, followed by roll pressing, to obtain a positive electrode.

In addition, 96 wt% of carbon powder as a negative electrode active material, 3 wt% of PVDF as a binder and 1 wt% of carbon black as a conductive material were added to NMP as a solvent to obtain a negative electrode mixture slurry. The negative electrode mixture slurry was applied to and dried on copper (Cu) foil having a thickness of 10 μm as a negative electrode current collector, followed by roll pressing, to obtain a negative electrode.

The positive electrode, the negative electrode and a separator including three layers of polypropylene/polyethylene/polypropylene (PP/PE/PP) were used to obtain an electrode assembly. Then, the composition for a gel polymer electrolyte prepared as described above was injected to the electrode assembly, and the electrode assembly was allowed to stand for 2 days and then heated at 60°C for 24 hours to obtain a lithium secondary battery including a gel polymer electrolyte. The resultant battery had a nominal voltage of 2.5-3.6 V. The battery had a capacity of 720 mAh.

[Test Examples]

### <u>Test Example 1: Test of Heat Emission Stability (Example 1 and Comparative Example 1)</u>

After each battery was manufactured, it was observed in terms of additional heat emission, while the temperature was increased in the fully charged state of the battery.

The heat flux was checked by using multiple module calorimetry (MMC) to 300°C at a warming rate of 0.2°C/min. Meanwhile, referring to FIG. 1 and Table 7, the first peak appears at 137.4 J in Example 1 and 156.9 J in Comparative Example 1, and the second peak appears at 127.4 J in Example 1 and 166.4 J in Comparative Example 1.

[Table 7]

| | First peak (J) | Second peak (J) |
|---|---|---|
| Ex. 1 | 137.4 | 127.4 |
| Comp. Ex. 1 | 156.9 | 166.4 |

In the case of the beaker cell according to Example 1, it can be seen that electric current increases rapidly at a lower voltage zone as compared to the voltage region where a conventional electrolyte is decomposed. It is thought that this is because the overcharge-preventing agent contained in the electrolyte is decomposed to cause an increase in electric current (A). On the contrary, in the case of the beaker cell according to Comparative Example 1, it can be seen that electric current increases at a higher voltage zone as compared to Example 1.

### <u>Test Example 2: Test for Evaluation of High-Temperature Capacity Retention and Increase in Resistance (Example 1 and Comparative Example 1)</u>

The battery according to each of Example 1 and Comparative Example 1 was charged to SOC 100% and was maintained at 60°C for total 4 weeks.

The capacity retention was determined as follows. When starting the test, the battery was charged to 4.2 V at 1 C and discharged to 2.5 V in a 60°C constant-temperature chamber, and the capacity at this time point was measured. Then, the battery was allowed to stand in the chamber, charged to 4.2 V at 1 C at a predetermined interval and discharged to 2.5 V, and the capacity was measured at each stage. This was carried out for 4 weeks. The initial capacity was taken as 100%, and each capacity value measured later was calculated in the unit of % based on the initial capacity.

Meanwhile, the increase in resistance was determined as follows. The battery according to each of Example 1 and Comparative Example 1 was subjected to pulse discharge (DC-IR detector) at each SOC zone by using the hybrid pulse power characterization (HPPC) method to record the resistance, and a change in voltage appearing upon the discharge was divided by the discharge current as shown in the following Formula 1 to calculate the resistance.

[Formula 1]

$$R = V/I$$

wherein R represents resistance, V represents a change in voltage appearing upon the discharge, and I represents discharge current.

[Table 8]

| | Capacity retention (%, 4 weeks) | Increase in resistance (%, 4 weeks) |
|---|---|---|
| Ex. 1 | 96.7% | 7.9% |
| Comp. Ex. 1 | 96.7% | 7.9% |

The results are shown in Table 8 and FIG. 2. As can be seen from Table 8 and FIG. 2, the gel polymer electrolyte according to the present disclosure does not affect the capacity or resistance of the battery, as compared to the use of a liquid electrolyte.

**Test Example 3: Evaluation of Low-Temperature Life Characteristics (Example 2 and Comparative Example 2)**

The battery according to each of Example 2 and Comparative Example 2 was charged/discharged at a temperature of 15°C to determine the capacity.

- Charge condition: 2 C, constant current (CC)/constant voltage (CV) (4.45 V, 0.05 C current cut-off)
- Discharge condition: 1 C, CC condition, 3 V

Then, the battery was repeatedly charged/discharged 200 times under the same current and voltage ranges.
The capacity retention was calculated according to the following Mathematical Formula 1:

Capacity retention (%) = [Discharge capacity at 200$^{th}$ cycle/Charge capacity at 1$^{st}$ cycle] x 100 [Mathematical Formula 1]

**Test Example 4: Evaluation of Room-Temperature Life Characteristics (Example 2 and Comparative Example 2)**

The battery according to each of Example 2 and Comparative Example 2 was charged/discharged at a temperature of 25°C to determine the capacity.

- Charge condition: 2 C, constant current (CC)/constant voltage (CV) (4.45 V, 0.05 C current cut-off)
- Discharge condition: 1 C, CC condition, 3 V

Then, the battery was repeatedly charged/discharged 300 times under the same current and voltage ranges.
The capacity retention was calculated according to the following Mathematical Formula 2:

Capacity retention (%) = [Discharge capacity at 300$^{th}$ cycle/Charge capacity at 1$^{st}$ cycle] x 100 [Mathematical Formula 2]

[Table 9]

| | Ex. 2 Capacity retention (%) | Comp. Ex. 2 Capacity retention (%) |
|---|---|---|
| Low temperature (15°C) | 87.6% | 86.6% |
| Room temperature (25°C) | 91.9% | 92.0% |

Referring to Table 9, the battery according to Example 2 realizes the equivalent level of capacity retention as compared to the battery using a conventional liquid electrolyte. Particularly, the battery according to Example 2 shows a

significantly higher capacity retention after repeated charge/discharge under a low-temperature condition, as compared to the battery according to Comparative Example 2.

## Test Example 5: High-Temperature Storage Characteristics (Example 2 and Comparative Example 2)

The battery according to each of Example 2 and Comparative Example 2 was allowed to stand in a chamber under the conditions of a temperature of 60°C and a relative humidity of 90% for 7 days, and evaluated in terms of the capacity retention and capacity recovery.

The capacity retention was determined as follows. When starting the test, the battery was charged/discharged once under the charge/discharge conditions as described in Test Example 4, and the capacity was measured. Then, the battery was allowed to stand in the chamber under the conditions of a temperature of 60°C and a relative humidity of 90% for 7 days, and then was taken out from the chamber, charged to 4.45 V at 0.2 C and discharged to 3 V, and the capacity was measured. The initially measured capacity was taken as 100%, and the residual capacity was calculated in the unit of %.

After that, each battery was allowed to stand at room temperature for a predetermined time and charged/-discharged at 0.2 C and 0.1 C to 3-4.45 V, and the capacity was measured. Then, the ratio of the capacity based on the initially measured capacity (taken as 100%) was calculated to determine the capacity recovery (%).

[Table 10]

| | Ex. 2 | Comp. Ex. 2 |
|---|---|---|
| Capacity retention % (0.2 C) | 88.1% | 88.1% |
| Capacity recovery % (0.2 C) | 97.2% | 97.0% |
| Capacity recovery % (0.1 C) | 91.4% | 91.2% |

Referring to Table 10, the battery according to Example 2 realizes the equivalent level of capacity retention as compared to the battery using a conventional liquid electrolyte. Particularly, the battery according to Example 2 shows a significantly higher capacity retention after repeated charge/discharge under a low-temperature condition, as compared to the battery according to Comparative Example 2.

## Test Example 6: Hot Box Profile (Example 2 and Comparative Example 2)

The battery according to each of Example 2 and Comparative Example 2 was subjected to a hot box test.

The battery according to each of Example 2 and Comparative Example 2 was charged to SOC 100%, introduced to a chamber capable of controlling temperature, warmed to 140°C at a rate of 5°C/min, and maintained at the same temperature for at least 1 hour. FIG. 3 and FIG. 4 show the hot box test result of the battery according to Example 2 and that of the battery according to Comparative Example 2, respectively.

It can be seen from the results that the battery according to Example 2 shows a longer time during which the voltage is maintained, as compared to the battery according to Comparative Example 2. However, the battery according to Comparative Example 2 causes a rapid increase in temperature after the lapse of 30 minutes, resulting in explosion, and thus cannot be operated. This demonstrates that the battery according to Example 2 has higher heat resistance as compared to the battery according to Comparative Example 2.

FIG. 6 is a photographic image of the battery according to Example 2, subjected to the hot box test. FIG. 7 is a photographic image of the battery according to Comparative Example 2, subjected to the hot box test. The battery as shown in FIG. 7 is damaged due to its explosion.

## Test Example 7: Comparison of Life Characteristics and Increase in Thickness (Example 2 and Comparative Example 2)

The battery according to each of Example 2 and Comparative Example 2 was charged/discharged at a temperature of 25°C to determine the capacity. Each battery was charged to 4.45 V in a constant current (CC)/constant voltage (CV) mode, while changing a rate to 2 C, 1.5 C and 1 C, with a cut-off current of 0.05 C. Each battery was discharged to 3 V in a CC mode at 1 C. The charge/discharge cycles were repeated 400 times under the same conditions.

FIG. 5 shows the capacity of the battery according to each of Example 2 and Comparative Example 2. It can be seen that the battery according to Example 2 and the battery according to Comparative Example 2 show a similar capacity variation. In addition, both the battery according to Example 2 and the battery according to Comparative Example 2 show a capacity retention of 78% at the $400^{th}$ cycle. In addition, at the $400^{th}$ cycle, the battery according to Example 2 and the battery according to Comparative Example 2 show an increase in thickness of less than 5.76 nm. Therefore, it can be seen

that the battery according to Example 2 has the equivalent level of electrochemical characteristics as compared to the battery using a conventional liquid electrolyte.

**Test Example 8 (Example 3 and Comparative Examples 3 and 4)**

The battery according to each of Example 3 and Comparative Examples 3 and 4 was charged/discharged three times to 2.5-3.6 V and maintained in a 60°C constant-temperature chamber at SOC 100% for 6 weeks. Then, the room-temperature resistance was measured at SOC 50%, and an increase in resistance based on the resistance of the initial battery was determined.

[Table 11]

| | Initial capacity (mAh) | Capacity after 6 weeks based on initial capacity (%) | Change in resistance after 6 weeks (at SOC 50) | |
|---|---|---|---|---|
| | | | Charge | Discharge |
| Ex. 3 | 719 | 89.5% | +0.48% | +0.73% |
| Comp. Ex. 3 | 719 | 89.5% | +8.95% | +4.71% |
| Comp. Ex. 4 | 718 | 89.5% | +3.21% | +2.31% |

The battery according to the present disclosure effectively inhibits the reaction between an electrode and an additive/electrolyte, and thus shows further improvement in terms of the increase in resistance.

## Claims

**1.** A gel polymer electrolyte comprising a matrix polymer, and an electrolyte with which the matrix polymer is impregnated,

wherein the matrix polymer is formed into a three-dimensional network structure through the polymerization of an oligomer represented by the following Chemical Formula 1,
the electrolyte comprises a lithium salt and a nonaqueous solvent, and
the nonaqueous solvent comprises at least one selected from the group consisting of a cyclic carbonate-based compound, a linear carbonate-based compound, an alkyl ether-based compound, an alkyl acetate-based compound, an alkyl propionate-based compound and a nitrile-based compound:

[Chemical Formula 1]

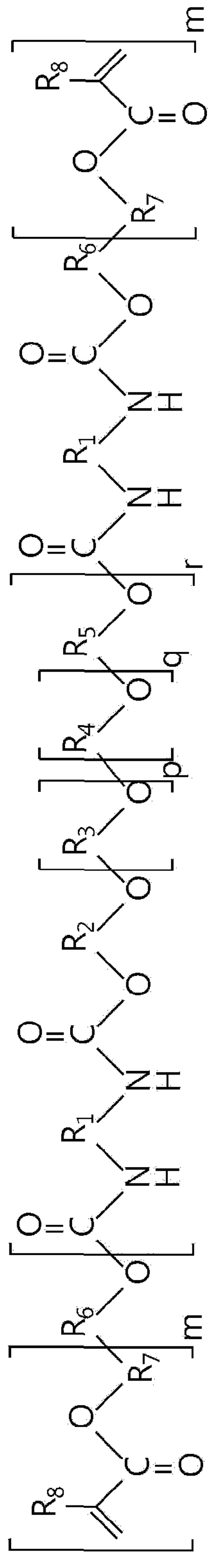

wherein r is an integer of 1 or more,
each $R_1$ represents an aliphatic hydrocarbon group or an aromatic hydrocarbon group,
each of $R_2$ and $R_5$ independently represents a C1-C3 alkyl group in which at least one hydrogen atom is substituted with a fluorine atom,
$R_3$ represents a Cn alkyl group in which all hydrogen atoms are substituted with fluorine atoms, $R_4$ represents a Cn-1 alkyl group in which all hydrogen atoms are substituted with fluorine atoms, and n is 2 or 3,
either of p and q represents 0, or both p and q may represent an integer of 1 or more, and when both p and q

represent an integer of 1 or more, p/q has a value of 1/9 to 9/1,
each of $R_6$ and $R_7$ independently represents a C1-C5 linear or branched alkyl group,
$R_8$ is null or represents a methyl group, and
m is an integer selected from 1, 2, 3, 4 and 5.

2. The gel polymer electrolyte according to claim 1, wherein the oligomer comprises unit A represented by the following Chemical Formula 2, unit B represented by the following Chemical Formula 3 and unit C represented by the following Chemical Formula 4:

[Chemical Formula 2]

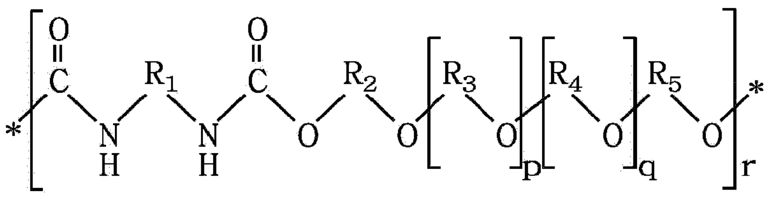

[Chemical Formula 3]

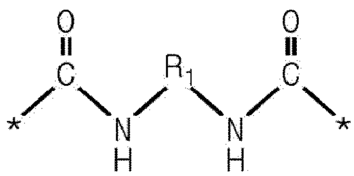

[Chemical Formula 4]

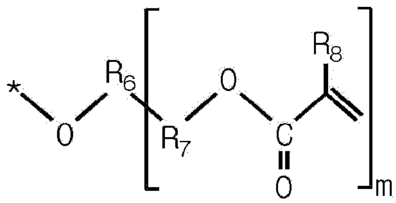

wherein r is an integer of 1 or more,

each $R_1$ represents an aliphatic hydrocarbon group or an aromatic hydrocarbon group,
each of $R_2$ and $R_5$ independently represents a C1-C3 alkyl group in which at least one hydrogen atom is substituted with a fluorine atom,
$R_3$ represents a Cn alkyl group in which all hydrogen atoms are substituted with fluorine atoms, $R_4$ represents a Cn-1 alkyl group in which all hydrogen atoms are substituted with fluorine atoms, and n is 2 or 3,
either of p and q represents 0, or both p and q may represent an integer of 1 or more, and when both p and q represent an integer of 1 or more, p/q has a value of 1/9 to 9/1,
each of $R_6$ and $R_7$ independently represents a C1-C5 linear or branched alkyl group,
$R_8$ is null or represents a methyl group, and
m is an integer selected from 1, 2, 3, 4 and 5.

3. The gel polymer electrolyte according to claim 2, wherein Chemical Formula 2 is divided into a unit represented by the following Chemical Formula 2-1 and a unit represented by the following Chemical Formula 2-2:

[Chemical Formula 2-1]

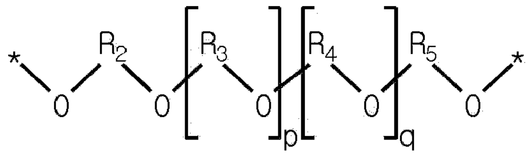

[Chemical Formula 2-2]

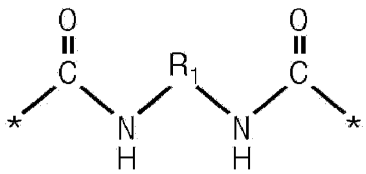

wherein $R_1$ represents an aliphatic hydrocarbon group, an alicyclic hydrocarbon group or an aromatic hydrocarbon group.

**4.** The gel polymer electrolyte according to claim 3, wherein the aliphatic hydrocarbon group is a C1-C20 alkylene group; a C1-C20 alkylene group containing an isocyanate (NCO) group; a C1-C20 alkoxylene group; a C2-C20 alkenylene group; or a C2-C20 alkynylene group;

the alicyclic hydrocarbon group is a substituted or non-substituted C4-C20 cycloalkylene group; a substituted or non-substituted C4-C20 cycloalkylene group containing an isocyanate (NCO) group; a C4-C20 cycloalkenylene group; or a C2-C20 heterocycloalkylene group; and
the aromatic hydrocarbon group is a substituted or non-substituted C6-C20 arylene group; or a C2-C20 heteroarylene group.

**5.** The gel polymer electrolyte according to claim 4, wherein the structure represented by Chemical Formula 2-2 is derived from any one selected from the compounds represented by the following Chemical Formula a to Chemical Formula n:

[Chemical Formula a]

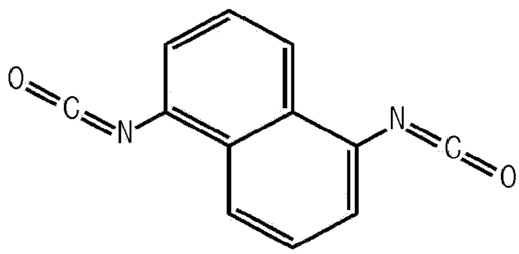

[Chemical Formula b]

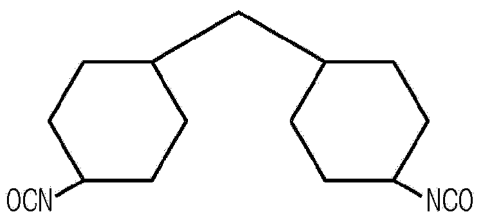

[Chemical Formula c]

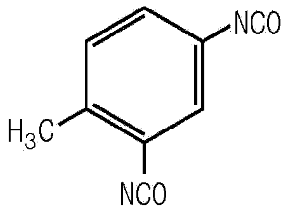

[Chemical Formula d]

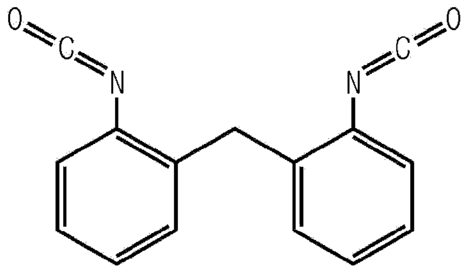

[Chemical Formula e]

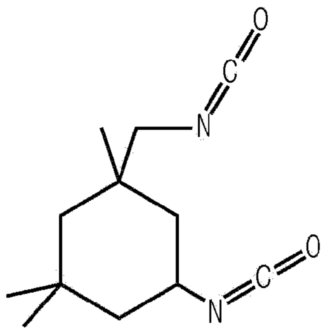

[Chemical Formula f]

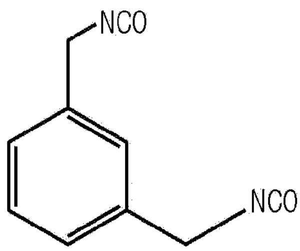

[Chemical Formula g]

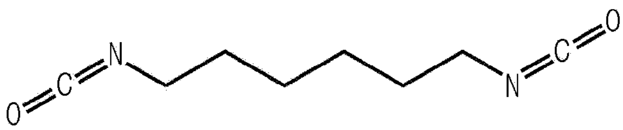

[Chemical Formula h]

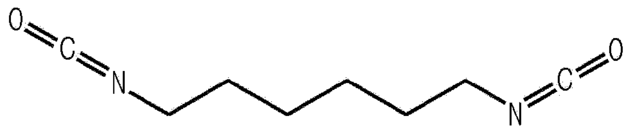

[Chemical Formula i]

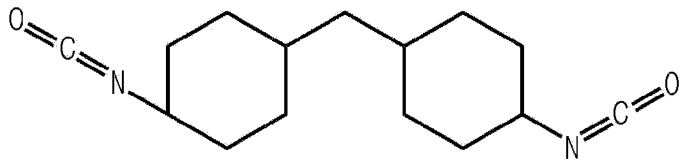

[Chemical Formula j]

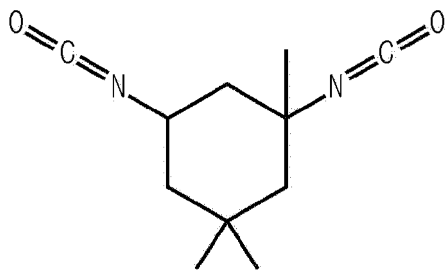

[Chemical Formula k]

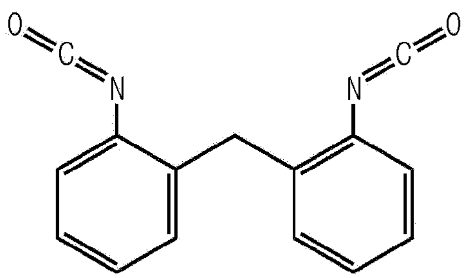

[Chemical Formula l]

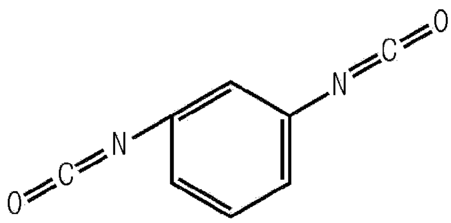

[Chemical Formula m]

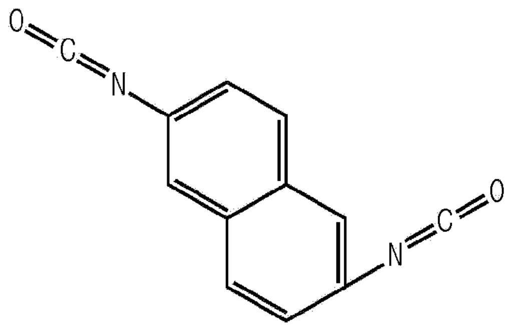

[Chemical Formula n]

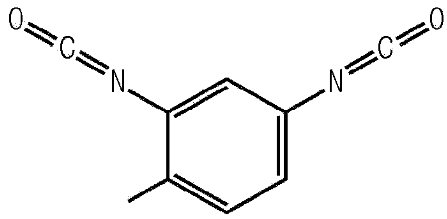

**6.** The gel polymer electrolyte according to claim 4, wherein the structure represented by Chemical Formula 2-2 is any one selected from the following Chemical Formula o to Chemical Formula x:

[Chemical Formula o]

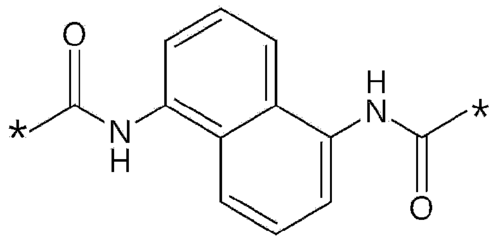

[Chemical Formula p]

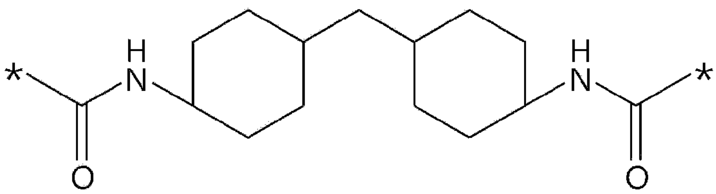

[Chemical Formula q]

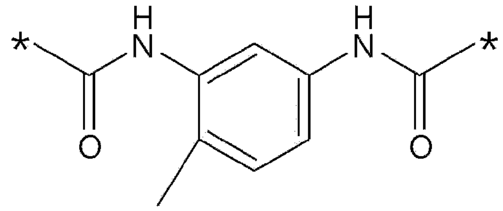

[Chemical Formula r]

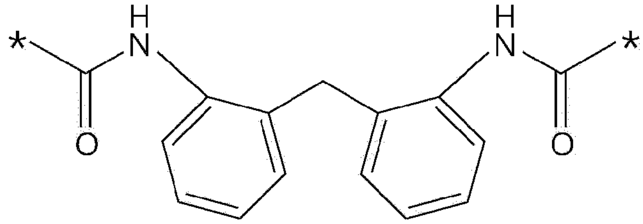

[Chemical Formula s]

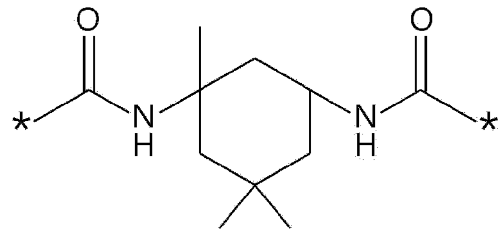

[Chemical Formula t]

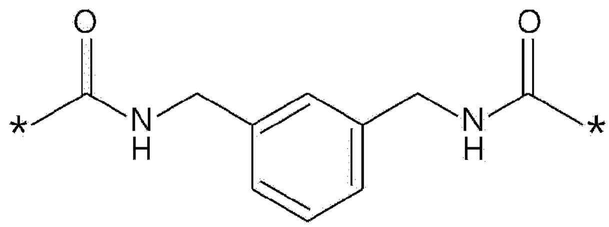

[Chemical Formula u]

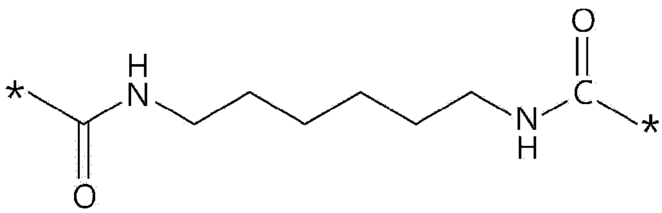

[Chemical Formula v]

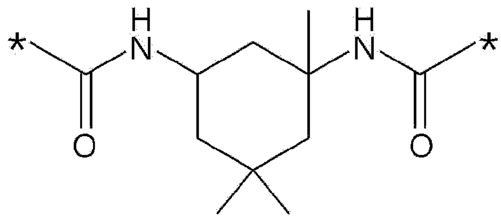

[Chemical Formula w]

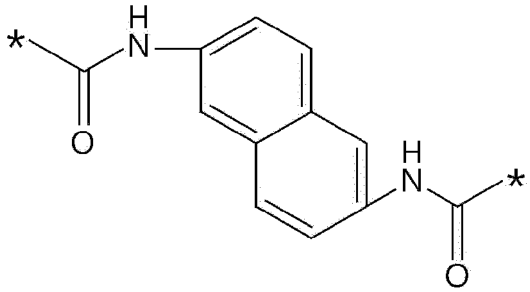

[Chemical Formula x]

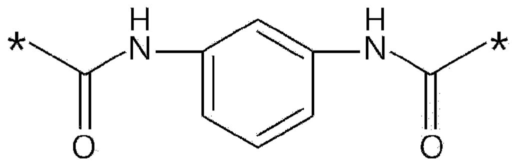

**7.** The gel polymer electrolyte according to claim 2, wherein Chemical Formula 4 provides (meth)acryloyl groups to both ends of the oligomer represented by Chemical Formula 1.

**8.** The gel polymer electrolyte according to claim 1, wherein the oligomer comprises a compound represented by the following Chemical Formula 5:

[Chemical Formula 5]

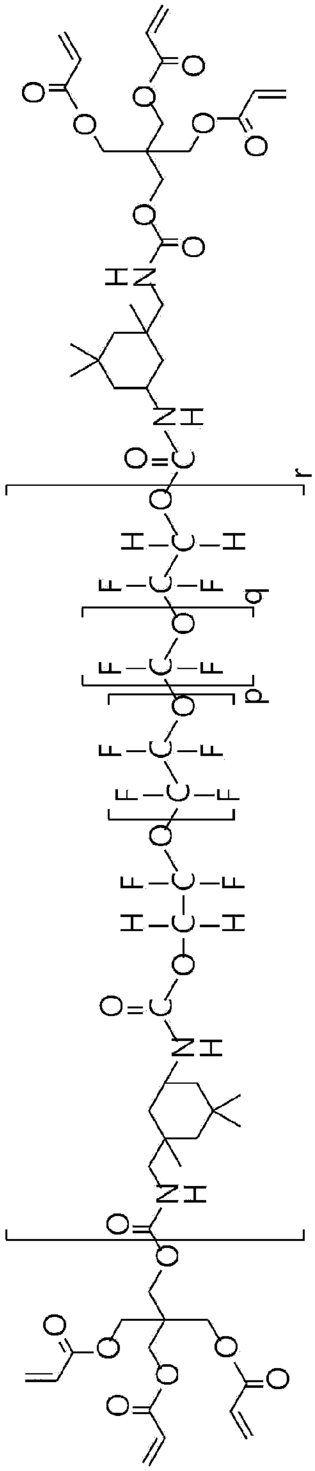

9. The gel polymer electrolyte according to claim 1, wherein the oligomer has a weight average molecular weight (Mw) of about 1,000-500,000 g/mol.

10. The gel polymer electrolyte according to claim 1, wherein the matrix polymer further comprises inorganic particles in an amount of 5-700 parts by weight based on 100 parts by weight of the oligomer.

11. The gel polymer electrolyte according to claim 1, which has a gel content of about 1 wt% or more at a temperature of 25°C.

12. A lithium-ion secondary battery comprising a negative electrode, a positive electrode and a gel polymer electrolyte,

wherein the gel polymer electrolyte is the same as defined in any one of claims 1 to 11.

**13.** A composition for a gel polymer electrolyte comprising a lithium salt, a nonaqueous solvent, a polymerization initiator and an oligomer represented by the following Chemical Formula 1, wherein the oligomer is present in an amount of 0.5-20 wt% based on the total weight of the composition for a gel polymer electrolyte:

[Chemical Formula 1]

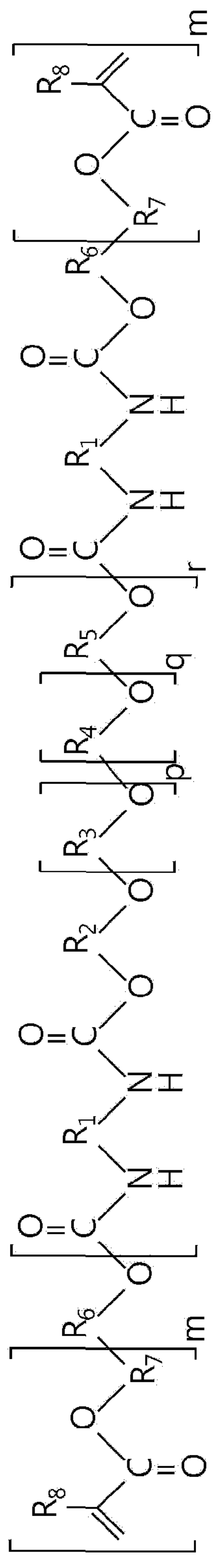

wherein r is an integer of 1 or more,

each $R_1$ represents an aliphatic hydrocarbon group or an aromatic hydrocarbon group,
each of $R_2$ and $R_5$ independently represents a C1-C3 alkyl group in which at least one hydrogen atom is substituted with a fluorine atom,

$R_3$ represents a Cn alkyl group in which all hydrogen atoms are substituted with fluorine atoms, $R_4$ represents a Cn-1 alkyl group in which all hydrogen atoms are substituted with fluorine atoms, and n is 2 or 3,
either of p and q represents 0, or both p and q may represent an integer of 1 or more, and when both p and q represent an integer of 1 or more, p/q has a value of 1/9 to 9/1,
each of $R_6$ and $R_7$ independently represents a C1-C5 linear or branched alkyl group,
$R_8$ is null or represents a methyl group, and
m is an integer selected from 1, 2, 3, 4 and 5.

FIG. 1

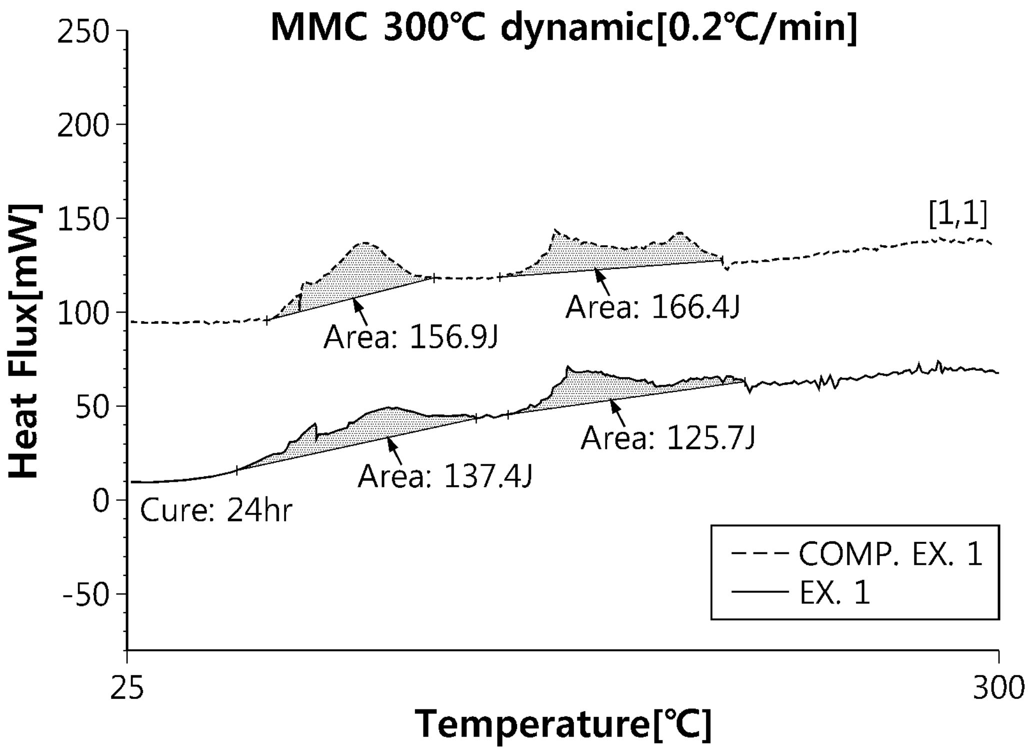
MMC 300℃ dynamic[0.2℃/min]
250
200
150
100
50
0
-50
Heat Flux[mW]
[1,1]
Area: 156.9J
Area: 166.4J
Area: 137.4J
Area: 125.7J
Cure: 24hr
COMP. EX. 1
EX. 1
25
300
Temperature[℃]

FIG. 2

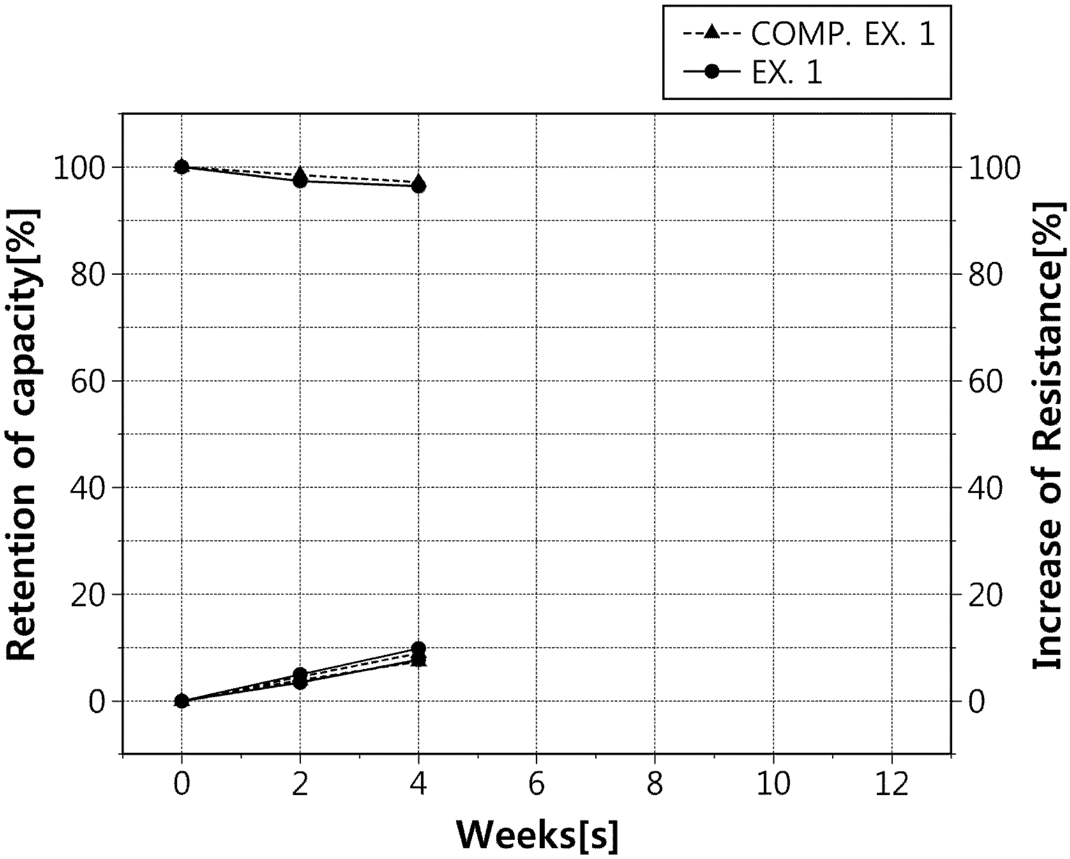
--▲-- COMP. EX. 1
—●— EX. 1
Retention of capacity[%]
Increase of Resistance[%]
Weeks[s]
100
80
60
40
20
0
0
2
4
6
8
10
12

FIG. 3

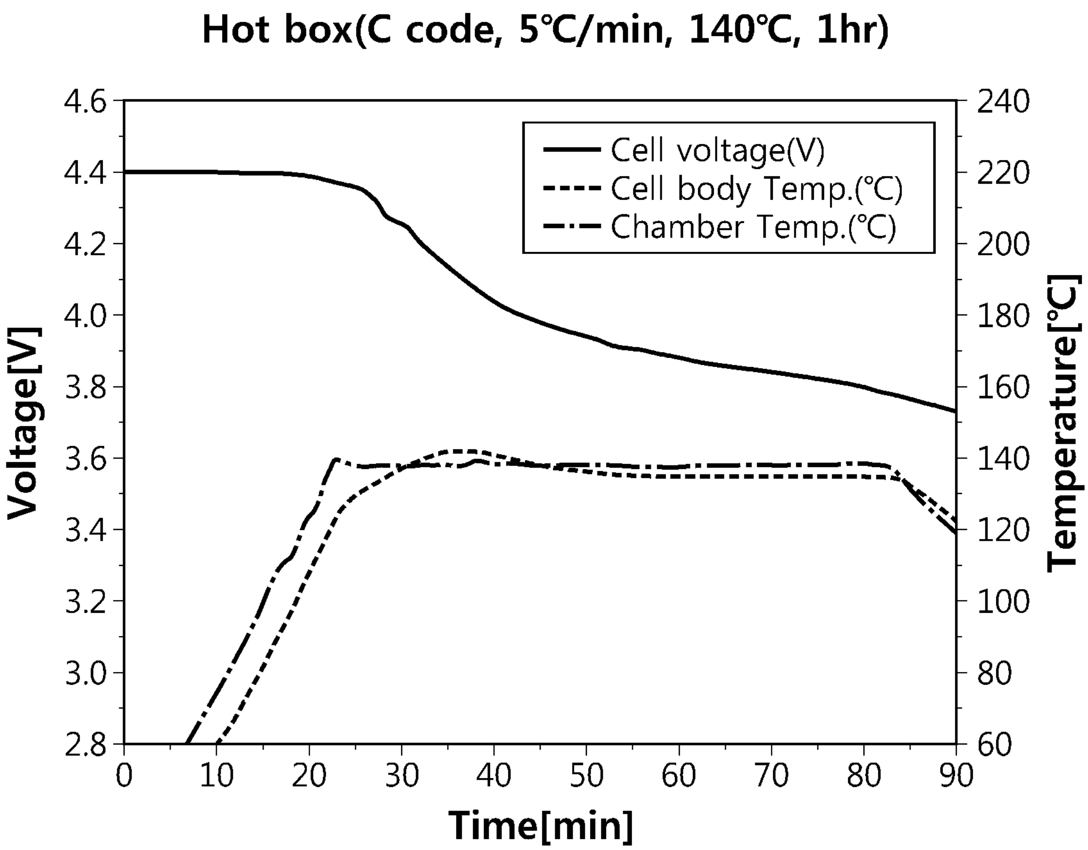
Hot box(C code, 5℃/min, 140℃, 1hr)
Cell voltage(V)
Cell body Temp.(℃)
Chamber Temp.(℃)
Voltage[V]
Temperature[℃]
Time[min]
4.6
4.4
4.2
4.0
3.8
3.6
3.4
3.2
3.0
2.8
240
220
200
180
160
140
120
100
80
60
0
10
20
30
40
50
60
70
80
90

FIG. 4

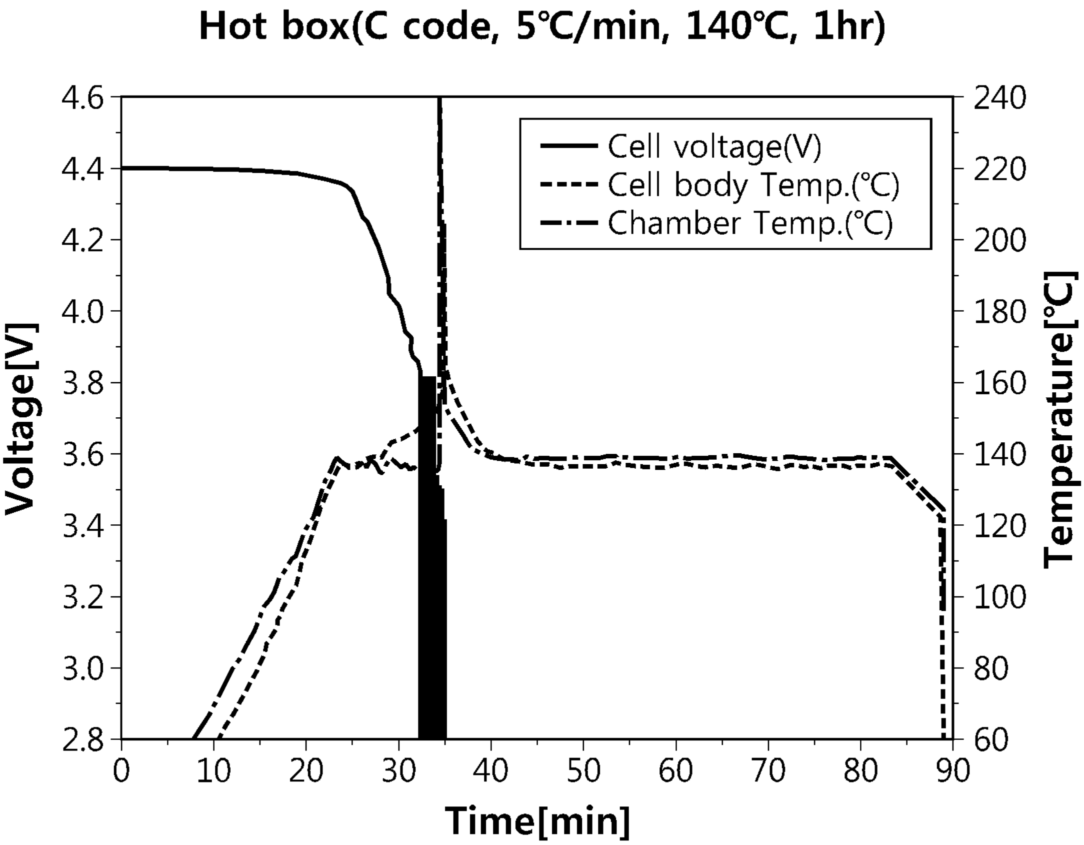
Hot box(C code, 5℃/min, 140℃, 1hr)
Cell voltage(V)
Cell body Temp.(℃)
Chamber Temp.(℃)
Voltage[V]
Temperature[℃]
Time[min]
4.6
4.4
4.2
4.0
3.8
3.6
3.4
3.2
3.0
2.8
240
220
200
180
160
140
120
100
80
60
0
10
20
30
40
50
60
70
80
90

FIG. 5

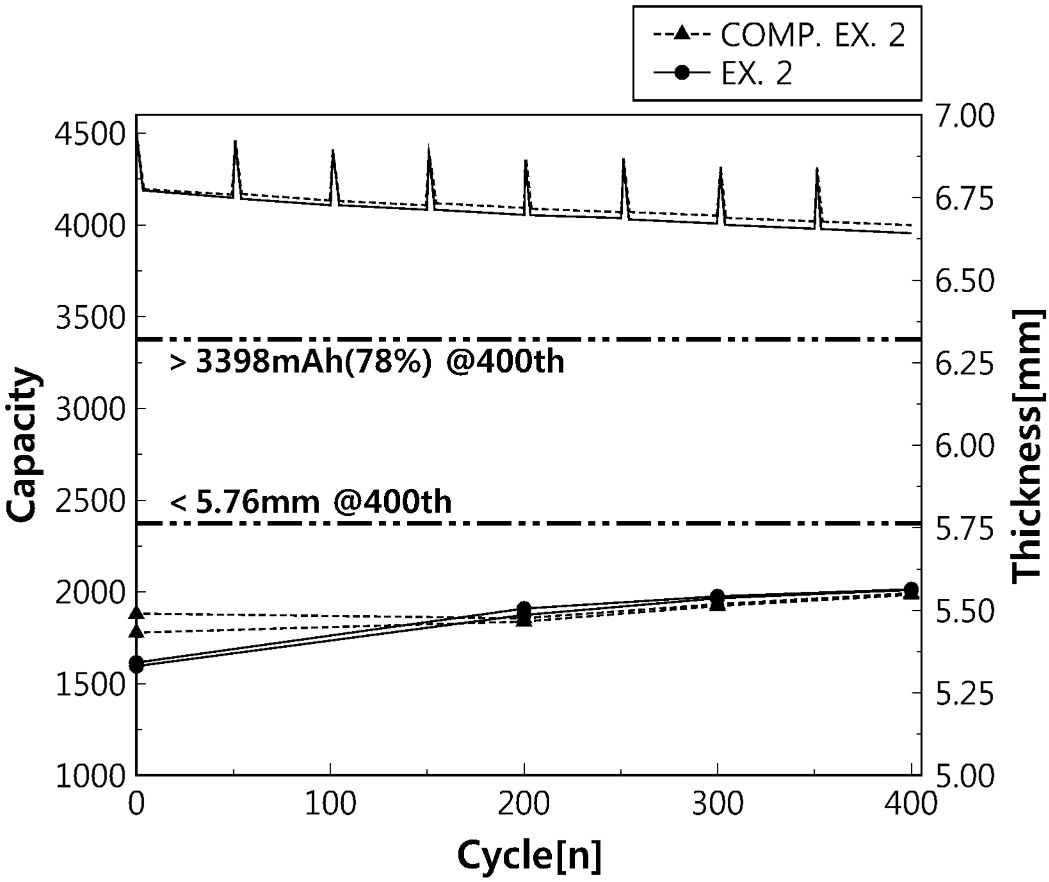

COMP. EX. 2
EX. 2
Capacity
Thickness[mm]
Cycle[n]
> 3398mAh(78%) @400th
< 5.76mm @400th
4500
4000
3500
3000
2500
2000
1500
1000
7.00
6.75
6.50
6.25
6.00
5.75
5.50
5.25
5.00
0
100
200
300
400

FIG. 6

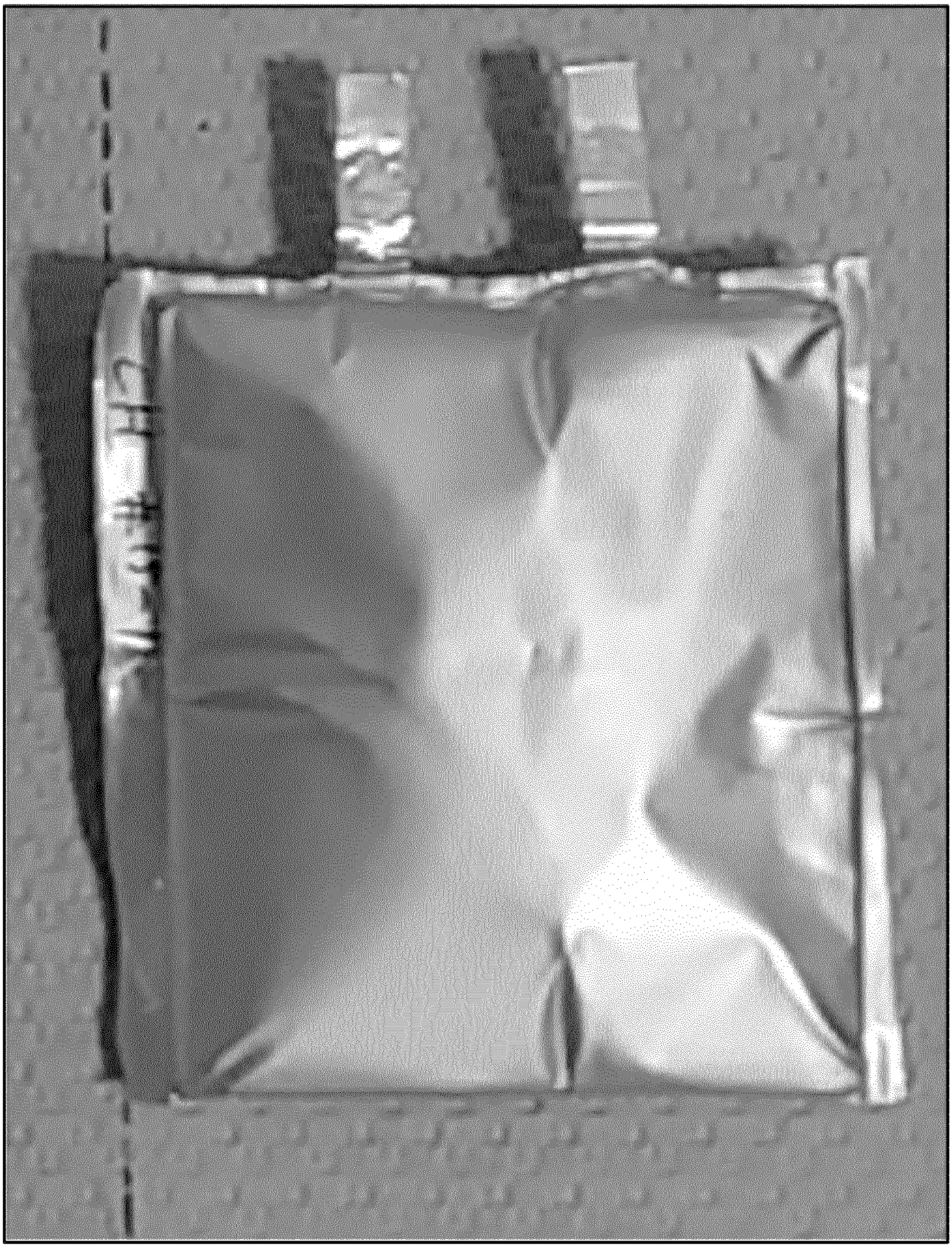

FIG. 7

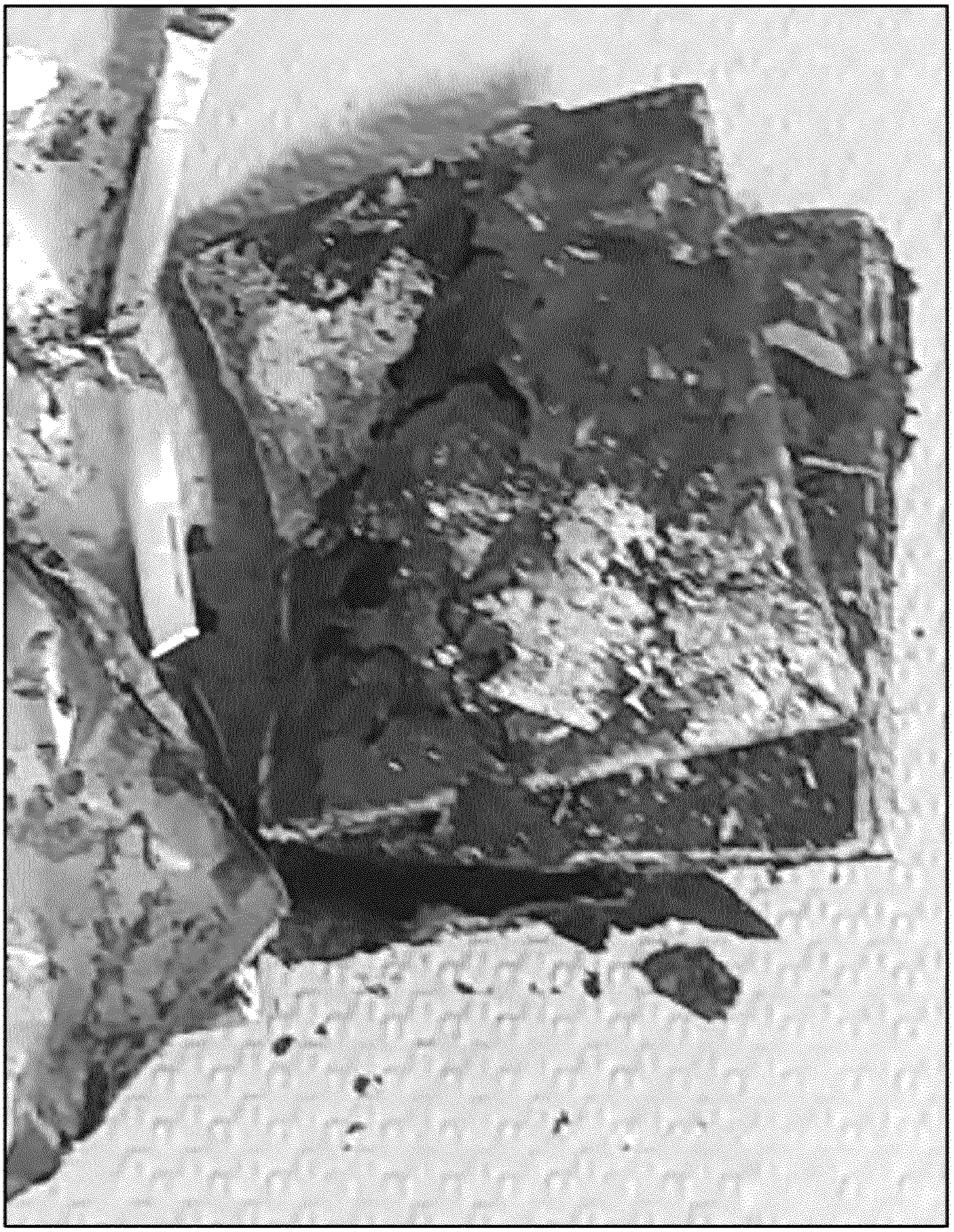

**INTERNATIONAL SEARCH REPORT**

International application No.
**PCT/KR2023/005137**

**A. CLASSIFICATION OF SUBJECT MATTER**

**H01M 10/0565**(2010.01)i; **H01M 10/0525**(2010.01)i

According to International Patent Classification (IPC) or to both national classification and IPC

**B. FIELDS SEARCHED**

Minimum documentation searched (classification system followed by classification symbols)

H01M 10/0565(2010.01); H01M 10/04(2006.01); H01M 10/052(2010.01); H01M 10/0525(2010.01); H01M 10/0567(2010.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), PubChem, Google & keywords: 젤 고분자 전해질 (gel polymer electrolyte), 매트릭스 폴리머 (matrix polymer), 리튬염 (lithium salt), 비수 용매 (non-aqueous solvent), 올리고머 (oligomer)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0036789 A (LG CHEM, LTD.) 07 April 2020 (2020-04-07) See claims 1, 7, 8 and 17; and paragraphs [0032], [0120]-[0122], [0124] and [0150]. | 1-13 |
| X | KR 10-2020-0052241 A (LG CHEM, LTD.) 14 May 2020 (2020-05-14) See claims 1, 8, 10 and 11; and paragraphs [0154]-[0159], [0188] and [0195]. | 1-13 |
| X | KR 10-2018-0026358 A (LG CHEM, LTD.) 12 March 2018 (2018-03-12) See claims 1, 3, 5, 6, 9, 10 and 12; and paragraphs [0016], [0179]-[0181], [0358], [0360], [0367], [0380] and [0381]. | 1-13 |
| A | KR 10-2001-0113525 A (NISSHINBO INDUSTRIES, INC.) 28 December 2001 (2001-12-28) See entire document. | 1-13 |
| A | VITALE, A. et al. Fluorinated oligomers and polymers in photopolymerization. Chemical review. 2015, vol. 115, pp. 8835-8866. See entire document. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 July 2023** | **19 July 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/005137**

| Patent document cited in search report | Publication date (day/month/year) | Patent family member(s) | Publication date (day/month/year) |
|---|---|---|---|
| KR 10-2020-0036789 A | 07 April 2020 | CN 111684643 A | 18 September 2020 |
| | | EP 3734738 A1 | 04 November 2020 |
| | | EP 3734738 A4 | 03 March 2021 |
| | | JP 2021-513188 A | 20 May 2021 |
| | | JP 2022-082673 A | 02 June 2022 |
| | | JP 7055884 B2 | 18 April 2022 |
| | | KR 10-2411731 B1 | 22 June 2022 |
| | | US 2021-0057780 A1 | 25 February 2021 |
| | | WO 2020-067779 A1 | 02 April 2020 |
| KR 10-2020-0052241 A | 14 May 2020 | CN 113544893 A | 22 October 2021 |
| | | EP 3863099 A1 | 11 August 2021 |
| | | EP 3863099 A4 | 03 November 2021 |
| | | KR 10-2443849 B1 | 19 September 2022 |
| | | US 2022-0085410 A1 | 17 March 2022 |
| | | WO 2020-096343 A1 | 14 May 2020 |
| KR 10-2018-0026358 A | 12 March 2018 | CN 108352569 A | 31 July 2018 |
| | | CN 108352569 B | 27 July 2021 |
| | | EP 3361546 A1 | 15 August 2018 |
| | | EP 3361546 A4 | 12 September 2018 |
| | | EP 3361546 B1 | 07 June 2023 |
| | | KR 10-2133384 B1 | 14 July 2020 |
| | | US 10714791 B2 | 14 July 2020 |
| | | US 2018-0342767 A1 | 29 November 2018 |
| | | WO 2018-044129 A1 | 08 March 2018 |
| KR 10-2001-0113525 A | 28 December 2001 | CA 2350702 A1 | 16 December 2001 |
| | | CN 1337757 A | 27 February 2002 |
| | | CN 1505849 A | 16 June 2004 |
| | | EP 1164654 A2 | 19 December 2001 |
| | | EP 1164654 A3 | 09 June 2004 |
| | | EP 1391958 A1 | 25 February 2004 |
| | | JP 2002-203604 A | 19 July 2002 |
| | | KR 10-2003-0089721 A | 22 November 2003 |
| | | SG 103298 A1 | 29 April 2004 |
| | | TW 501306 B | 01 September 2002 |
| | | TW 543215 B | 21 July 2003 |
| | | US 2002-0009649 A1 | 24 January 2002 |
| | | US 2004-0076885 A1 | 22 April 2004 |
| | | US 6696204 B2 | 24 February 2004 |
| | | WO 02-087003 A1 | 31 October 2002 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220046564